# EUROPÄISCHE PATENTSCHRIFT

(11) **EP 3 209 915 B1**
(45) Veröffentlichungstag und Bekanntmachung des Hinweises auf die Patenterteilung: **13.06.2018**
(21) Anmeldenummer: 15702634.5
(22) Anmeldetag: 04.02.2015
(51) Int. Cl.: F15B 13/02, F16K 27/00, F15B 13/08

(54) **VENTILANORDNUNG**
VALVE ARRANGEMENT
ENSEMBLE DE SOUPAPE

(43) Veröffentlichungstag der Anmeldung: 30.08.2017
(73) Patentinhaber: Festo AG & Co. KG, 73734 Esslingen (DE)
(72) Erfinder: ALEXANDROV, Alexandros, 73730 Esslingen (DE); WENSKE, Eduard, 70806 Kornwestheim (DE); BRENNER, Jakob, 73734 Esslingen (DE)
(74) Vertreter: Patentanwälte Magenbauer & Kollegen Partnerschaft mbB
(86) Internationale Anmeldenummer: PCT/EP2015/000214
(87) Internationale Veröffentlichungsnummer: WO 2016/124210

(56) Entgegenhaltungen:
- EP-A1- 0 688 958
- EP-A1- 2 226 537
- US-A- 4 167 200
- US-A- 5 829 560

## Beschreibung

Die Erfindung betrifft eine Ventilanordnung, mit einem Ventilträger, der eine Bestückungsfläche aufweist, an die unter Zwischenschaltung von über gummielastische Eigenschaften verfügenden Dichtungsmitteln mindestens eine Ventileinheit der Ventilanordnung mit einer Montagefläche voraus angesetzt ist, mit mehreren sich jeweils aus einem in der Ventileinheit verlaufenden Ventileinheit-Kanalabschnitt und einem im Ventilträger verlaufenden Ventilträger-Kanalabschnitt zusammensetzenden Fluidkanälen, wobei die Ventileinheit-Kanalabschnitte zu der Montagefläche ausmünden und jeweils unter Zwischenschaltung der Dichtungsmittel mit einem zu der Bestückungsfläche ausmündenden Ventilträger-Kanalabschnitt kommunizieren, wobei mindestens einer der Fluidkanäle ein zu einer Drucksenke führender Fluidabführkanal ist, in dessen Verlauf ein eine Fluidströmung in Richtung zu der Drucksenke zulassendes und in der Gegenrichtung verhinderndes Rückschlagventil eingeschaltet ist, das ein bewegliches Rückschlagventil aufweist, das zum Verhindern der Fluidströmung an einem Ventilsitz des Rückschlagventils anliegt und zum Zulassen der Fluidströmung von dem Ventilsitz abgehoben ist, und wobei die Dichtungsmittel in Form einer gummielastischen Dichtungsplatte ausgeführt sind, die sich zwischen der Montagefläche und der Bestückungsfläche erstreckt und die für jeden abzudichtenden Fluidkanal eine dessen Ventileinheit-Kanalabschnitt mit dem zugeordneten Ventilträger-Kanalabschnitt verbindende Durchbrechung aufweist, wobei die mindestens einem Fluidabführkanal zugeordnete Durchbrechung an der dem Ventilträger zugewandten Seite der Dichtungsplatte vom Ventilsitz eines Rückschlagventils umrahmt ist, der ein einstückiger Bestandteil der Dichtungsmittel ist.

Eine aus der EP 2 226 537 B1 bekannte Ventilanordnung enthält einen Ventilträger, der mit mehreren nebeneinander angeordneten, elektrisch betätigbaren Ventileinheiten bestückt ist, die jeweils in der Lage sind, die Fluidströmung eines fluidischen Druckmediums zu steuern. Jede Ventileinheit verfügt an ihrer Unterseite über eine Montagefläche, mit der sie auf einer Bestückungsfläche des Ventilträgers montiert ist. Sich in dem Ventilträger und in der Ventileinheit erstreckende Fluidkanäle ermöglichen eine gesteuerte Fluidströmung von und zu einem oder mehreren angeschlossenen Verbrauchern. Das von den Verbrauchern zurückströmende Druckmedium wird durch mindestens einen einer jeweiligen Ventileinheit zugeordneten Fluidabführkanal hindurch einer Drucksenke zugeführt. Bei der hauptsächlichen Anwendung der Ventilanordnung wird Druckluft als Druckmedium verwendet, wobei als Drucksenke die Atmosphäre genutzt wird, so dass die Fluidabführkanäle auch als Entlüftungskanäle bezeichnet werden können. Um eine zentrale Druckluftabfuhr zu ermöglichen, sind die einzelnen Fluidabführkanäle in dem Ventilträger gruppenweise an einem oder mehrere Sammelabführkanäle angeschlossen. Um in diesem Zusammenhang zu vermeiden, dass von einer Ventileinheit abgegebene Abluft durch Zurückströmen in eine andere Ventileinheit unerwünschte Aktionen hervorruft, ist in jeden Fluidabführkanal ein Rückschlagventil eingeschaltet, das eine Fluidströmung nur in Richtung zur Drucksenke zulässt. Eine entgegengesetzte Fluidströmung wird dadurch unterbunden, dass die entsprechende Druckdifferenz ein Rückschlagventil des Rückschlagventils in eine Schließstellung bewegt, in der es an einem Ventilsitz anliegt und einen Fluiddurchtritt durch den Fluidabführkanal hindurch verhindert.

Bei der aus der vorgenannten EP 2 226 537 B1 bekannten Ventilanordnung sind die Rückschlagventile als eigenständige Rückschlagventileinheiten in die Ventileinheit-Kanalabschnitte der Fluidabführkanäle eingesetzt. Jedes Rückschlagventil enthält ein topfförmiges Ventilgehäuse, an dem der Ventilsitz ausgebildet ist und in dem das Rückschlagventilglied bewegbar aufgenommen ist. Um die Ventileinheit-Kanalabschnitte und die Ventilträger-Kanalabschnitte der einzelnen Fluidkanäle zur Umgebung hin abzudichten, sind zwischen die Bestückungsfläche und eine jeweilige Montagefläche gummielastische Dichtungsmittel eingeschaltet, die die miteinander fluchtenden Kanalmündungen umrahmen und bei denen es sich um einzelne Dichtungsringe handelt. Insgesamt ist der mit der Herstellung und der Montage verbundene Aufbau der bekannten Ventilanordnung relativ aufwendig, was zu relativ hohen Herstellungskosten führt.

Die US 4 167 200 A beschreibt eine Ventilanordnung der eingangs genannten Art, die eine Basis aufweist, auf der unter Zwischenfügung einer Dichtung ein Verteiler montiert ist. Unter Mitwirkung der Dichtung sind Rückschlagventile gebildet, die in zwischen der Basis und dem Verteiler verlaufenden Fluidkanälen angeordnet sind.

Aus der EP 0 688 958 B1 ist eine Ventilanordnung bekannt, bei der mehrere Ventileinheiten jeweils unter Zwischenschaltung einer gummielastischen Dichtungsplatte an einem Ventilträger montiert sind. Die gummielastische Dichtungsplatte ermöglicht eine gemeinsame Abdichtung sämtlicher Fluidkanäle im Übergangsbereich zwischen dem Ventilträger und einer jeweiligen Ventileinheit. Eine Ausstattung mit Rückschlagventilen zur Verhinderung der Rückströmung vom Druckmedium ist bei dieser Ventilanordnung nicht vorgesehen.

Aus der EP2102536B1 ist eine Ventilanordnung bekannt, bei der mehrere Ventileinheiten auf einem Ventilträger montiert sind, wobei jeder Ventileinheit ein für die Versorgung mit Druckmedium dienender Speisekanal zugeordnet ist. Damit beim Abnehmen einer Ventileinheit kein Druckmedium aus dem Ventilträger austritt, ist in den im Ventilträger verlaufenden Ventilträger-Kanalabschnitt des Speisekanals ein Rückschlagventil eingeschaltet, das durch die montierte Ventileinheit mechanisch in einer Offenstellung gehalten wird und das durch Federmittel in eine Schließstellung umschaltet, wenn die zugeordnete Ventileinheit vom Ventilträger abgenommen wird.

Der Erfindung liegt die Aufgabe zugrunde, eine Ventilanordnung der eingangs genannten Art zu schaffen, die bei einfachem und kostengünstigem Aufbau eine zuverlässige Abdichtung der Fluidkanäle gewährleistet und eine unerwünschte Rückströmung von Druckmedium innerhalb eines Fluidabführkanals verhindert.

Zur Lösung dieser Aufgabe ist in Verbindung mit den eingangsgenannten Merkmalen vorgesehen, dass der Ventilsitz des Rückschlagventils in den Ventilträger-Kanalabschnitt des zugeordneten Fluidabführkanals hineinragt.

Auf diese Weise werden der Aufbau der Dichtungsmittel und des Rückschlagventils erheblich vereinfacht. Das Rückschlagventil benötigt keinen eigenständigen Gehäusekörper zur Definition des Ventilsitzes, sondern nutzt als Ventilsitz unmittelbar einen integralen Abschnitt der Dichtungsmittel. Die Dichtungsmittel haben folglich eine Doppelfunktion, indem sie sowohl die Fluidkanäle im Übergangsbereich zwischen dem Ventilträger und einer jeweiligen Ventileinheit zur Atmosphäre hin abdichten als auch für das einem Fluidabführkanal zugeordnete Rückschlagventil den Ventilsitz definieren. Damit verbunden ist eine sehr kostengünstige Herstellung und ein einfacher, zeitsparender Zusammenbau der Ventilanordnung. Die Dichtungsmittel sind in Form einer Dichtungsplatte ausgeführt, die über gummielastische Eigenschaften verfügt und die zwischen die Bestückungsfläche des Ventilträgers und die Montagefläche einer jeweiligen Ventileinheit eingegliedert ist. Diese Dichtungsplatte enthält für jeden in dem Fügebereich zwischen einer Ventileinheit und dem Ventilträger abzudichtenden Fluidkanal eine Durchbrechung, die den in der Ventileinheit verlaufenden Ventileinheit-Kanalabschnitt mit dem im Ventilträger verlaufenden Ventilträger-Kanalabschnitt verbindet. Diejenige Durchbrechung, die einem mit einem Rückschlagventil ausgestatteten Fluidabführkanal zugeordnet ist, ist an der dem Ventilträger zugewandten Seite der Dichtungsplatte vom Ventilsitz eines Rückschlagventils umrahmt. Dabei ist die Dichtungsplatte so ausgebildet, dass der Ventilsitz des Rückschlagventils in den Ventilträger-Kanalabschnitt des zugeordneten Fluidabführkanals hineinragt.

Vorteilhafte Weiterbildungen der Erfindungen gehen aus den Unteransprüchen hervor.

Vorzugsweise sind bei mindestens einer und zweckmäßigerweise bei jeder Ventileinheit nicht nur ein, sondern zwei Fluidkanäle als Fluidabführkanäle ausgebildet, die unabhängig voneinander nutzbar sind. Mindestens einem und zweckmäßigerweise jedem dieser beiden Fluidabführkanäle ist dabei ein Rückschlagventil zugeordnet, das in dem oben beschriebenen Sinne konzipiert ist. Ein solcher Aufbau ist insbesondere dann zweckmäßig, wenn das betreffende Ventil der Ventilanordnung ein 5/2-Wegeventil oder ein 5/3-Wegeventil ist, das über zwei Fluidabführkanäle verfügt, um das von einem angeschlossenen Verbraucher zurückströmende Druckmedium an eine Drucksenke, insbesondere zur Atmosphäre abzuführen.

An dieser Stelle sei erwähnt, dass es sich bei der mindestens einen Ventileinheit der Ventilanordnung vorzugsweise um eine elektrisch betätigbare Ventileinheit handelt, vorzugsweise um eine elektro-fluidisch und dabei insbesondere elektro-pneumatisch vorgesteuerte Ventileinheit.

Die Dichtungsplatte verfügt zweckmäßigerweise über einen Plattenkörper, der bevorzugt gummielastische Eigenschaften hat und der von denjenigen Durchbrechungen durchsetzt ist, die jeweils in den Verlauf eines Fluidkanals eingeschaltet sind. Der Plattenkörper ist zweckmäßigerweise abgesehen von den den Fluidkanälen zugeordneten Durchbrechungen durchbrechungslos ausgebildet. Es besteht aber die Möglichkeit, zur Materialeinsparung solche Bereiche des Plattenkörpers, die nicht der Abdichtung dienen, mit durchgehenden Aussparungen zu versehen.

Bevorzugt ist der Ventilsitz stirnseitig an einem als Ventilsitz-Fortsatz bezeichneten rohrstutzenartigen Fortsatz ausgebildet, der an der dem Ventilträger zugewandten Seite einstückig an den Plattenkörper der Dichtungsplatte angeformt ist. Dieser Ventilsitz-Fortsatz ragt in den Ventilträger-Kanalabschnitt hinein und weist zweckmäßigerweise an seiner dem Plattenkörper entgegengesetzten axialen Stirnfläche den Ventilsitz auf.

Es besteht die Möglichkeit, den Ventilsitz-Fortsatz so auszuführen, dass er mit seinem radialen Außenumfang unter Abdichtung an der Wandung des zugeordneten Ventilträger-Kanalabschnitts anliegt und auf diese Weise zur Abdichtung des Fluidabführkanals gegenüber der Atmosphäre beiträgt. Bevorzugt wird allerdings eine Ausführungsform, bei der die Dichtungsplatte zusätzlich zu dem rohrstutzenartigen Ventilsitz-Fortsatz einen an der gleichen Seite wie der Ventilsitz-Fortsatz am Plattenkörper angeformten ringförmigen Dichtwulst aufweist, der mit radialem Abstand zur Mündung des Ventilträger-Kanalabschnitts unter Abdichtung am Ventilträger anliegt. Dieser ringförmige Dichtwulst ist bevorzugt konzentrisch zu dem Ventilsitz-Fortsatz angeordnet.

Zweckmäßigerweise ist jede einem Fluidkanal zugeordnete Durchbrechung an der dem Ventilträger zugewandten Seite des Plattenkörpers von einem einstückig mit dem Plattenkörper ausgebildeten ringförmigen Dichtwulst umschlossen, um durch Zusammenwirken mit dem Ventilträger eine Abdichtung des zugeordneten Fluidkanals bezüglich der Atmosphäre zu bewirken.

Auf der der Ventileinheit zugewandten Seite der Dichtungsplatte wird die Abdichtung insbesondere dadurch vorgenommen, dass jede einem Fluidkanal zugeordnete Durchbrechung des Plattenkörpers von einem einstückig an den Plattenkörper der Dichtungsplatte angeformten ringförmigen Dichtkragen umschlossen ist, der im Bereich der Montagefläche und der Abdichtung an der Ventileinheit anliegt. Bevorzugt ragt jeder ringförmige Dichtkragen in einen erweiterten Endabschnitt des zugeordneten Ventileinheit-Kanalabschnitts hinein und ist bevorzugt mit einer an der Ventileinheit ausgebildeten ringförmigen Dichtfläche axial verpresst.

Die einem Rückschlagventil zugeordnete Durchbrechung der Dichtungsplatte ist vom Rückschlagventilglied des Rückschlagventils zweckmäßigerweise axial beweglich durchsetzt. Das Rückschlagventilglied kann sich folglich sowohl in Richtung zur Ventileinheit als auch in Richtung zum Ventilträger bewegen. Auf der dem Ventilträger zugewandten Seite der Dichtungsplatte ist das Rückschlagventilglied mit einem Verschlusskopf ausgestattet, dessen Querschnitt größer ist als die vom Ventilsitz umrahmte Fläche, so dass der Verschlusskopf in der Lage ist, unter Abdichtung am Ventilsitz des Rückschlagventils anzuliegen, wenn das Rückschlagventilglied aufgrund der an ihm anliegenden Druckdifferenz eine entsprechende Schließstellung einnimmt.

Das Rückschlagventil ist insbesondere so ausgebildet, dass das Rückschlagventilglied eine den Fluiddurchtritt durch den Fluidabführkanal hindurch zulassende maximale Offenstellung einnimmt, wenn gleichhohe Drücke im Ventileinheit-Kanalabschnitt und im Ventilträger-Kanalabschnitt des Fluidabführkanals herrschen. Diese Grundstellung nimmt das Rückschlagventilglied zweckmäßigerweise allein aufgrund seiner Gewichtskraft ein, wenn die Ventilanordnung so ausgerichtet ist, dass die axiale Richtung des Rückschlagventils vertikal verläuft.

Das Rückschlagventilglied ist zweckmäßigerweise frei beweglich zwischen der Schließstellung und der maximalen Offenstellung ausgebildet. Vorzugsweise sind keinerlei Federmittel vorhanden, die das Rückschlagventilglied in eine Offenstellung vorspannen. Es besteht gleichwohl die Möglichkeit, das Rückschlagventilglied zur Vorgabe einer definierten Grundstellung durch Federmittel in die maximale Offenstellung vorzuspannen, wobei die Federkraft der Federmittel zweckmäßigerweise relativ gering gewählt wird, um ein bestmögliches Ansprechverhalten des Rückschlagventilglieds zu gewährleisten.

Um in der Offenstellung des Rückschlagventilglieds eine hohe Strömungsrate für die Fluidabfuhr zu ermöglichen, ist es vorteilhaft, wenn der Verschlusskopf über einen möglichst geringen Querschnitt verfügt. Um eine zuverlässige Umschaltbewegung ohne Verkantungsgefahr zu gewährleisten, ist es jedoch vorteilhaft, wenn der Verschlusskopf an seinem radialen Außenumfang über mehrere Führungsvorsprünge verfügt, die gleitverschieblich an der Wandung des Ventilträger-Kanalabschnitts anliegen. Diese Führungsvorsprünge sind mit Abstand zueinander rings um den radialen Außenumfang des Verschlusskopfes herum verteilt, so dass zwischen in der Umfangsrichtung benachbarten Führungsvorsprüngen ein Zwischenraum verbleibt, der das Hindurchströmen des Druckmediums ermöglicht. Die Führungsvorsprünge sind insbesondere als Führungsrippen mit axialer Erstreckung ausgeführt.

Zur Definition der maximalen Offenstellung des Rückschlagventilglieds ist das Rückschlagventilglied auf der der Ventileinheit zugewandten Seite der Dichtungsplatte zweckmäßigerweise mit einem in die Ventileinheit hineinragenden Anschlagkopf versehen, der die Umschaltbewegung des Rückschlagventilgliedes mitmacht und der sich in der maximalen Offenstellung des Rückschlagventilglieds von der Seite der Ventileinheit her direkt oder indirekt an der Dichtungsplatte abstützt. Folglich ist die maximale Offenstellung des Rückschlagventilglieds durch direktes oder indirektes Zusammenwirken zwischen dem Anschlagkopf und der Dichtungsplatte definiert.

Eine bevorzugte Ausgestaltung zur direkten Abstützung des Rückschlagventilglieds in der Offenstellung sieht vor, dass der Anschlagkopf zumindest partiell einen größeren Querschnitt hat als der Querschnitt der dem Rückschlagventil zugeordneten Durchbrechung der Dichtungsplatte, so dass der Anschlagkopf nicht durch die Durchbrechung hindurchtreten kann. Hier fungiert unmittelbar der die Durchbrechung umrahmende Randabschnitt der Dichtungsplatte als eine Abstützstruktur für den Anschlagkopf. Um eine zuverlässige Umschaltbewegung des Rückschlagventils zu gewährleisten, kann der Anschlagkopf im Ventileinheit-Kanalabschnitt des Fluidabführkanals linear verschiebbar geführt aufgenommen sein. Um den gewünschten Strömungsdurchsatz bei einer Druckentlastung eines angeschlossenen Verbrauchers zu gewährleisten, ist es vorteilhaft, wenn der Anschlagkopf einfach oder mehrfach axial durchbrochen ist.

Bei einer weiteren vorteilhaften Ausgestaltung stützt sich der Anschlagkopf zur Vorgabe der maximalen Offenstellung nur indirekt an der Dichtungsplatte ab, indem er sich an einem bezüglich der Dichtungsplatte separaten Abstützkörper abstützt, der sich seinerseits an der der Ventileinheit zugewandten Seite der Dichtungsplatte abstützt. Der Abstützkörper ist von dem Rückschlagventilglied axial beweglich durchsetzt und befindet sich zwischen der Dichtungsplatte und dem Anschlagkopf des Rückschlagventilglieds. Um den gewünschten Durchsatz an Druckmedium zu gewährleisten, ist es vorteilhaft, wenn der Abstützkörper einfach oder mehrfach durchbrochen ist.

Zur Fixierung im Fluidkanal ist der Abstützkörper zweckmäßigerweise axial zwischen der Dichtungsplatte und der Ventileinheit fixiert und insbesondere axial eingespannt. Bevorzugt ist der Endabschnitt des Ventileinheit-Kanalabschnitts des Fluidabführkanals durch eine Abstufung erweitert, wobei der Abstützkörper in dem erweiterten Endabschnitt aufgenommen ist. Der Abstützkörper ist zweckmäßigerweise scheibenförmig gestaltet.

Der bezüglich der Dichtungsplatte separate Abstützkörper kann zwischen die Ventileinheit und die Dichtungsplatte eingegliedert sein, ohne an der Dichtungsplatte rechtwinklig zur Plattenebene fixiert zu sein. Beispielsweise kann der Abstützkörper in einen auf der Seite der Ventileinheit von der Dichtungsplatte wegragenden ringförmigen Dichtkragen eingesetzt sein, so dass er von diesem Dichtkragen radial außen umschlossen ist. Es besteht auch die Möglichkeit, den Abstützkörper formschlüssig und/oder kraftschlüssig und/oder stoffschlüssig an der Dichtungsplatte zu fixieren, so dass er mit der Dichtungsplatte zu einer einheitlich handhabbaren Baueinheit vereinigt ist.

Die Ventilanordnung ist zweckmäßigerweise mit einer Mehrzahl von Ventileinheiten ausgestattet, die nebeneinander an der Bestückungsfläche montiert sind. Jeder Ventileinheit sind eigene Fluidkanäle zugeordnet, die sich teils in der Ventileinheit und teils im Ventilträger erstrecken. Jeder Ventileinheit ist dabei auch mindestens ein mit einem Rückschlagventil ausgestatteter Fluidabführkanal zugeordnet. Vorzugsweise sind die Fluidabführkanäle mehrerer Ventileinheiten innerhalb des Ventilträgers mit einem gemeinsamen Sammelabführkanal verbunden, durch den hindurch das über mehrere Ventileinheiten zurückgeführte Druckmedium an eine Drucksenke, insbesondere an die Atmosphäre abgeführt wird. Ein solcher Sammelabführkanal ermöglicht in vorteilhafter Weise eine gefasste Abfuhr von Abluft oder auch die zentrale Abfuhr von Abluft durch einen einzigen Schalldämpfer hindurch. Insbesondere wenn an einem Sammelabführkanal ein Schalldämpfer angeschlossen ist, kann es bei der Fluidabfuhr zu einem Rückstau kommen, der sich über die Fluidabführkanäle auf andere Ventileinheiten auswirken könnte. Durch die erfindungsgemäße Einschaltung eines Rückschlagventils in einen jeweiligen Fluidabführkanal können solche Auswirkungen jedoch unterbunden werden.

In dem Ventilträger verläuft zweckmäßigerweise auch ein Sammel-Speisekanal, an den sämtliche Ventileinheiten im Bereich der Bestückungsfläche und unter Zwischenschaltung der Dichtungsmittel angeschlossen sind und über den sämtliche Ventileinheiten der Ventilanordnung mit dem zu steuernden Druckmedium, insbesondere mit Druckluft versorgt werden. In an sich bekannter Weise ist außerdem jeder Ventileinheit mindestens ein Arbeitskanal zugeordnet, an den ein anzusteuernder Verbraucher anschließbar ist und der sich zweckmäßigerweise auch durch den Ventilträger hindurch erstreckt. Jeder Ventileinheit ist zweckmäßigerweise mindestens ein solcher Arbeitskanal individuell zugeordnet.

Nachfolgend wird die Erfindung anhand der beiliegenden Zeichnung näher erläutert. In dieser zeigen:

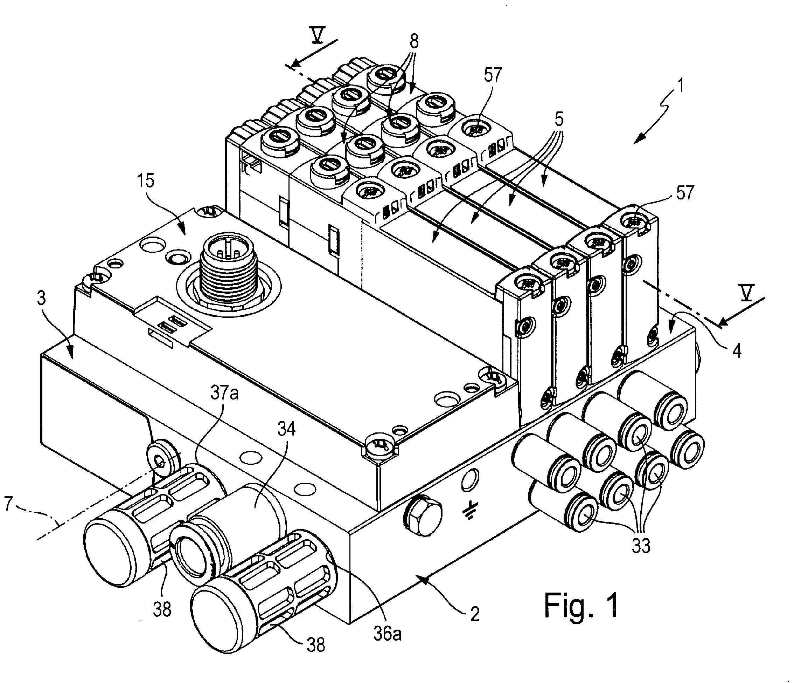

- Figur 1: Eine bevorzugte Ausführungsform der erfindungsgemäßen Ventilanordnung in einer perspektivischen Darstellung,

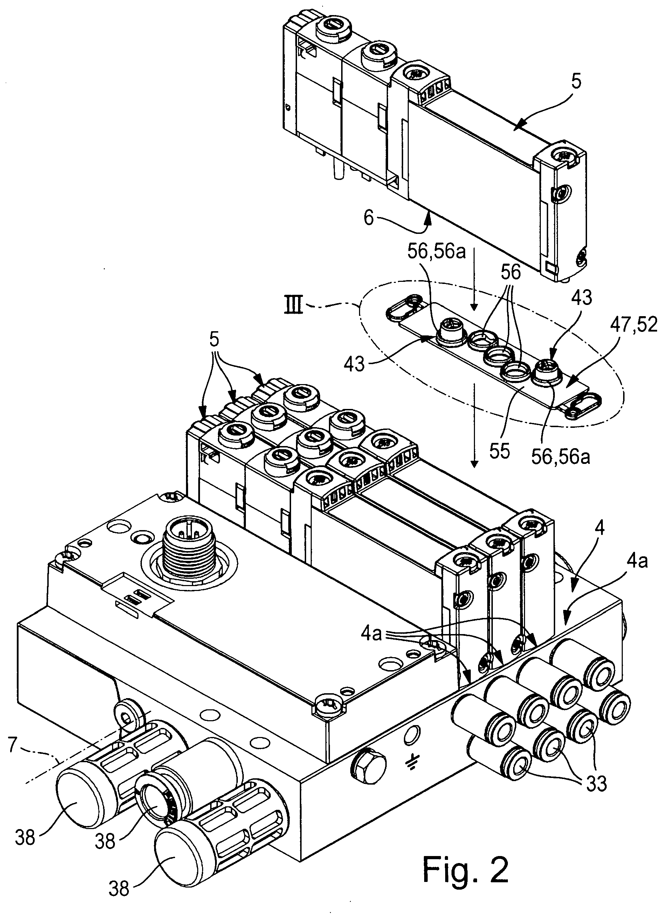

- Figur 2: die Ventilanordnung aus Figur 1 im abgenommenen Zustand einer Ventileinheit, wobei eine zwischen der Ventileinheit und dem Ventilträger platzierte, mit zwei Rückschlagventilen ausgestattete Dichtungs-platte in einem strichpunktiert umrahmten Bereich sichtbar ist, wobei eine mögliche erste Variante von Rückschlagventilen zum Einsatz kommt,
- Figur 3: die in Figur 2 strichpunktiert bei III umrahmte Dichtplatte-Rückschlagventil-Baugruppe in einer vergrößerten isometrischen Einzeldarstellung,
- Figur 4: eine weitere Ausführungsform einer Dichtplatte-Rückschlagventil-Baugruppe, die im Unterschied zu der Ausführungsform aus Figur 3 mit einer möglichen zweiten Variante von Rückschlagventilen bestückt ist,
- Figur 5: einen Querschnitt durch die Ventilanordnung gemäß Schnittlinie V-V aus Figur 1, die mit der aus Figur 3 ersichtlichen Dichtplatte-Rückschlagventil-Baugruppe ausgestattet ist, wobei der Schnitt durch diese Baugruppe entsprechend Schnittlinie V-V aus Figur 3 verläuft,
- Figur 6: in einer der Figur 5 entsprechenden Darstellungs-weise eine modifizierte Ventilanordnung, die mit der Dichtplatte-Rückschlagventil-Baugruppe der Figur 4 ausgestattet ist, die hier gemäß Schnittlinie VI-VI aus Figur 4 geschnitten ist,
- Figur 7: den in Figur 5 strichpunktiert umrahmten Ausschnitt VII in einer vergrößerten Einzeldarstellung,
- Figur 8: den in Figur 5 strichpunktiert umrahmten Ausschnitt VIII in einer vergrößerten Einzeldarstellung,
- Figur 9: den in Figur 6 strichpunktiert umrahmten Ausschnitt IX in einer vergrößerten Darstellung,
- Figur 10: den in Figur 6 strichpunktiert umrahmten Ausschnitt X in einer vergrößerten Darstellung,

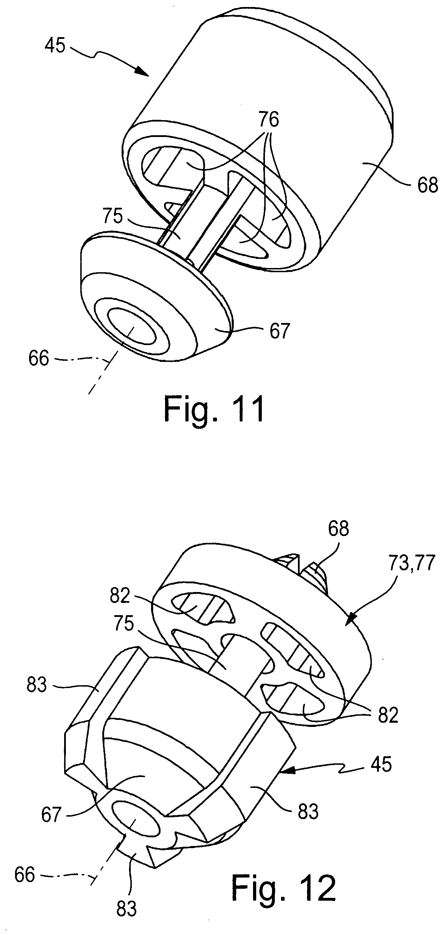

- Figur 11: eine Einzeldarstellung des bei der Variante gemäß Figuren 3 und 5 zum Einsatz kommenden Rückschlagventilglieds in einer perspektivischen Ansicht, und
- Figur 12: die Kombination aus einem Rückschlagventilglied und einem Abschnittskörper gemäß der aus den Figuren 4 und 6 ersichtlichen Variante eines Rückschlagventils.

Sofern keine anderslautenden Angaben gemacht werden, bezieht sich die nachstehende Beschreibung auf alle in der Zeichnung illustrierten Ausführungsbeispiele.

Die insgesamt mit Bezugsziffer 1 bezeichnete Ventilanordnung verfügt über einen Ventilträger 2, der an einer in der üblichen Gebrauchslage vertikal nach oben weisenden Oberseite 3 eine Bestückungsfläche 4 aufweist, an der mindestens eine Ventileinheit 5 in bevorzugt lösbarer Weise mit einer an ihrer Unterseite ausgebildeten Montagefläche 6 voraus montiert ist. Bei einem nicht gezeigten Ausführungsbeispiel ist die Bestückungsfläche 4 zur Bestückung mit nur einer einzigen Ventileinheit 5 ausgebildet. Vorzugsweise ist die Bestückungsfläche 4 jedoch so gestaltet, dass an ihr gleichzeitig mehrere Ventileinheiten 5 in einer Nebeneinanderanordnung montierbar oder montiert sind. Letzteres trifft auf die Ausführungsbeispiele zu, wo die Bestückungsfläche 4 in mehrere in Achsrichtung einer Hauptachse 7 nebeneinander angeordnete Bestückungsplätze 4a eingeteilt ist, an die jeweils eine der mehreren Ventileinheiten 5 mit ihrer Montagefläche 6 angesetzt ist. Die derart montierten Ventileinheiten 5 sind folglich auch in Achsrichtung der Hauptachse 7 nebeneinander angeordnet. Man kann folglich von einer Ventilbatterie sprechen.

Der Ventilträger 2 ist bevorzugt plattenförmig ausgebildet. Exemplarisch handelt es sich bei ihm um einen einstückigen Körper. Bei einem nicht gezeigten Ausführungsbeispiel hat der Ventilträger 2 einen modularen Aufbau und umfasst mehrere in Achsrichtung der Hauptachse 7 aneinandergereihte und aneinander befestigte Ventilträgermodule. Die Bestückungsfläche 4 erstreckt sich dabei über mehrere dieser Ventilträgermodule hinweg, die jeweils genau einen Bestückungsplatz 4a oder auch mehrere nebeneinanderliegende Bestückungsplätze 4a definieren.

Die Ventileinheiten 5 sind bevorzugt von elektrisch betätigbarer Bauart. Sie verfügen über eine elektrisch betätigbare Antriebseinrichtung 8, die vorzugsweise vom elektromagnetischen oder piezoelektrischen Typ ist. Bevorzugt handelt es sich bei den Ventileinheiten 5 um elektro-fluidisch und bevorzugt elektro-pneumatisch vorgesteuerte Ventileinheiten 5, deren Antriebseinrichtung 8 eine Vorsteuerventileinrichtung 8a ist, die beispielsweise über ein oder zwei Magnetventile oder Piezoventile als Vorsteuerventile verfügt.

Die Antriebseinrichtung 8 empfängt ihre Betätigungssignale über an ihr ausgebildete, elektrische Kontaktmittel 12. Diese Kontaktmittel 12 befinden sich zweckmäßigerweise im Bereich der Montagefläche 6 und tauchen bei montierter Ventileinheit 5 in einen sich im Innern des Ventilträgers 2 in Achsrichtung der Hauptachse 7 erstreckenden Kommunikationskanal 13 ein, in dem sich eine über elektrische Verbindungsleiter verfügende elektrische Kommunikationseinrichtung 14 erstreckt. Alle Antriebseinrichtungen 8 sind über ihre elektrischen Kontaktmittel 12 mit der elektrischen Kommunikationseinrichtung 14 verbunden, über die hinweg die Antriebseinrichtungen 8 ihre den Betrieb der zugeordneten Ventileinheit 5 steuernden Betätigungssignale erhalten. Vorzugsweise ist die elektrische Kommunikationseinrichtung 14 mit einer außen am Ventilträger 2 montierten elektrischen Anschlusseinheit 15 verbunden, über die eine elektrische Verbindung zu einer externen elektronischen Steuereinrichtung herstellbar ist. Die elektrische Anschlusseinheit 15 kann auch unmittelbar selbst eine elektronische Steuereinheit beinhalten.

Jede Ventileinheit 5 ist mit einer Steuerventileinrichtung 16 ausgestattet, die ein in einem Ventilgehäuse 17 der Ventileinheit 5 bewegbar aufgenommenes und in unterschiedlichen Schaltstellungen positionierbares Steuerventilglied 18 enthält. Bevorzugt ist das Steuerventilglied 18 ein kolbenartiger Ventilschieber, was auf das Ausführungsbeispiel zutrifft. Die Schaltstellung des Steuerventilglieds 18 wird durch die Antriebseinrichtung 8 vorgegeben. Wenn die Antriebseinrichtung 8 wie bei den Ausführungsbeispielen eine Vorsteuerventileinrichtung 8a ist, erfolgt das Umschalten des Steuerventilglieds 18 mittels eines fluidischen Druckmediums, mit dem das Steuerventilglied 18 durch die Vorsteuerventileinrichtung 8a gesteuert beaufschlagbar ist.

Bei den Ausführungsbeispielen sind die Ventileinheiten 5 als 5/2-Wegeventile ausgebildet, deren Steuerventilglied 18 in zwei unterschiedlichen Schaltstellungen positionierbar ist. Andere Bauarten der Ventileinheiten 5 sind ebenfalls möglich, beispielsweise in einer Ausführungsform als 5/3-Wegeventile und/oder in einer Ausgestaltung als 3/2-Wegeventile.

Jede Ventileinheit 5 ist in der Lage, abhängig von der Schaltstellung ihres Steuerventilglieds 18 eine Mehrzahl von Fluidkanälen 22 in einem vorbestimmten Muster miteinander zu verbinden und voneinander abzutrennen. Bei diesen Fluidkanälen 22 handelt es sich exemplarisch um einen Fluidzuführkanal 23, um zwei Arbeitskanäle 24, 25 sowie um zwei Fluidabführkanäle 26, 27. Bei einem anderen Ausführungsbeispiel, insbesondere wenn die Ventileinheit 5 eine 3/2-Ventilfunktionalität hat, sind die Arbeitskanäle und die Fluidabführkanäle jeweils nur einfach vorhanden.

Jeder dieser Fluidkanäle 22 mündet einerseits in eine im Innern des Ventilgehäuses 17 ausgebildete Ventilkammer 28 und führt andererseits zu einer Ausmündung an der Außenfläche des Ventilträgers 2. In der Ventilkammer 28 befindet sich das bewegliche Steuerventilglied 18, das mit bezüglich dem Ventilgehäuse 17 ortsfesten Dichtflächen 32 kooperiert, so dass in jeder der beiden Schaltstellungen des Steuerventilglieds 18 einer der Arbeitskanäle 24, 25 mit dem Fluidzufuhrkanal 23 und der jeweils andere Arbeitskanal 24, 25 mit einem der beiden Fluidführkanäle 26, 27 fluidisch verbunden ist.

Den an der Außenfläche des Ventilträgers 2 befindlichen Kanalmündungen der Arbeitskanäle 24, 25 sind Anschlussmittel 33 zugeordnet, an denen zu anzusteuernden Verbrauchern führende Fluidleitungen, insbesondere Druckluftschläuche anschließbar sind. Bei den Verbrauchern handelt es sich insbesondere um fluidbetätigte Antriebe.

Jeder Arbeitskanal 24, 25 ist einer der Ventileinheiten 5 individuell zugeordnet. Auf diese Weise ist jede Ventileinheit 5 in der Lage, einen Verbraucher unabhängig von den anderen Ventileinheiten 5 fluidisch anzusteuern.

Den mehreren Fluidzuführkanälen 23 der Ventilanordnung 1 ist an der Außenfläche des Ventilträgers 2 eine gemeinsame Ausmündung zugeordnet, die mit einem Einspeise-Anschlussmittel 34 versehen ist, durch das eine Verbindung zu einer externen Druckquelle herstellbar ist, insbesondere zu einer Druckluftquelle. Das Einspeise-Anschlussmittel 34 ist insbesondere dafür ausgebildet, eine zu der Druckquelle führende Fluidleitung lösbar anschließen zu können. Die dem Einspeise-Anschlussmittel 34 zugeordnete Ausmündung gehört zu einem den Ventilträger 2 in Achsrichtung der Hauptachse 7 durchziehenden Sammel-Einspeisekanal 35, mit dem im Innern des Ventilträgers 2 jeder Fluidzuführkanal 23 mit seinem der Ventilkammer 28 entgegengesetzten Ende verbunden ist.

Die den einzelnen Ventileinheiten 5 zugeordneten Fluidabführkanäle 26, 27 kommunizieren im Innern des Ventilträgers 2 mit mindestens einem Sammelabführkanal 36, 37, der mit mindestens einer Abführ-Ausmündung 36a, 37a zur Außenfläche des Ventilträgers 2 ausmündet. Es ist möglich, einen einzigen Sammelabführkanal für sämtliche Fluidabführkanäle 26, 27 vorzusehen. Zweckmäßigerweise entspricht die Anzahl der Sammelabführkanäle 36, 37 jedoch der Anzahl der einer jeweiligen Ventileinheit 5 zugeordneten Fluidabführkanäle 26, 27. Dementsprechend sind beim Ausführungsbeispiel in dem Ventilträger 2 zwei Sammelabführkanäle 36, 37 ausgebildet, mit denen jeweils einer der beiden Fluidabführkanäle 26, 27 einer jeweiligen Ventileinheit 5 kommuniziert und der über eine von zwei Abführ-Ausmündungen 36a, 37a, zur Außenfläche des Ventilträgers 2 ausmündet. Über diese Abführ-Ausmündungen 36a, 37a ist jeder Sammelabführkanal 36, 37 und mithin auch jeder Fluidabführkanal 26, 27 mit einer Drucksenke verbunden, bei der es sich exemplarisch um die Atmosphäre handelt. An die Abführ-Ausmündungen 36a, 37a angebrachte Schalldämpfer 38 reduzieren das Ausströmgeräusch der Druckluft. Alternativ kann an den Abführ-Ausmündungen 36a, 37a auch jeweils eine Abführleitung angeschlossen werden, um das abzuführende Druckmedium gefasst von der Ventilanordnung 1 wegzuführen.

Obgleich sich die Ventilanordnung 1 zur Steuerung der Verteilung beliebiger fluidischer Druckmedien eignet, wird sie doch vorzugsweise zur Steuerung der Verteilung von Druckluft eingesetzt. In diesem Fall können die Fluidabführkanäle 26, 27 auch als Entlüftungskanäle bezeichnet werden.

Wenn im Betrieb der Ventilanordnung 1 eine Ventileinheit 5 einen derartigen Betriebszustand aufweist, dass einer ihrer Fluidabführkanäle 26, 27 durch die Ventilkammer 28 hindurch mit einem der der gleichen Ventileinheit 5 zugeordneten Arbeitskanäle 24, 25 verbunden ist, strömt vom angeschlossenen Verbraucher abzuführendes Druckmedium aus der Ventileinheit 5 durch den betreffenden Fluidabführkanal 26, 27 hindurch und auch durch den sich daran anschließenden Sammelabführkanal 36, 37 hindurch zur angeschlossenen Drucksenke ab. Strömungspfeile 42 in der Zeichnung illustrieren die dabei auftretende Strömungsrichtung, die im Folgenden auch als Abströmrichtung bezeichnet wird.

Da die Fluidabführkanäle 26, 27 gruppenweise an ein und denselben Sammelabführkanal 36, 37 angeschlossen sind, könnte aus einer Ventileinheit 5 abströmendes Druckmedium prinzipiell durch den Sammelabführkanal 36, 37 und einen der anderen Fluidabführkanäle 26, 27 hindurch unerwünscht in eine oder mehrere der anderen Ventileinheiten 5 überströmen, was unerwünschte Vorgänge auslösen könnte, beispielsweise unerwünschte Betätigungen eines an eine andere Ventileinheit 5 angeschlossenen Antriebes. Damit derartige unerwünschte Rückwirkungen nicht auftreten können, ist in den Verlauf eines jeden Fluidabführkanals 26, 27 ein Rückschlagventil 43 eingeschaltet, das eine Fluidströmung in der Abströmrichtung 42, also in Richtung zu der Drucksenke zulässt und in der Gegenrichtung, also in Richtung zur Ventileinheit 5 verhindert.

Diese Rückschlagventile 43 haben jeweils ein bewegliches Rückschlagventilglied 45, das unter Ausführung einer durch einen Doppelpfeil angedeuteten Umschaltbewegung 44 zwischen einer Schließstellung und mindestens einer Offenstellung bewegbar ist. In der Schließstellung liegt das Rückschlagventilglied 45 an einem ringförmigen Ventilsitz 46 des Rückschlagventils 43 an und sperrt den zugeordneten Fluidabführkanal 26, 27 ab. In jeder Offenstellung ist das Rückschlagventilglied 45 von dem Ventilsitz 46 abgehoben und lässt auf diese Weise eine Fluidströmung durch den betreffenden Fluidabführkanal 26, 27 hindurch zu. Die jeweilige Schaltstellung des Rückschlagventilgliedes 45 hängt von der in Richtung der Umschaltbewegung 44 auf das Rückschlagventilglied 45 einwirkenden Druckdifferenz ab. Ist der Fluidabführkanal 26, 27 drucklos oder ist der auf der Seite der Ventileinheit 5 des Rückschlagventilglieds 45 in dem Fluidabführkanal 26, 27 herrschende Fluiddruck größer als auf der der Drucksenke bzw. einem Sammelabführkanal 36, 37 zugewandten Seite, nimmt das Rückschlagventilglied 45 eine Offenstellung ein. Dies ist gleichzeitig die Grundstellung des Rückschlagventilglieds 45. Kehren sich die Druckverhältnisse jedoch um, so dass der von einem Sammelabführkanal 36, 37 her auf das Rückschlagventilglied 45 einwirkende Druck größer ist als der in der Öffnungsrichtung wirkende Druck, schaltet das Rückschlagventilglied 45 schlagartig in die Schließstellung um und verhindert eine Fluidströmung in der der Abströmrichtung 42 entgegengesetzten Strömungsrichtung.

Zwischen den Ventilträger 2 und jede Ventileinheit 5 sind über gummielastische Eigenschaften verfügende Dichtungsmittel 47 eingegliedert, die dafür sorgen, dass der durch einen jeweiligen Fluidkanal 22 hindurch stattfindende Fluidübertritt zwischen dem Ventilträger 2 und einer jeweiligen Ventileinheit 5 in bezüglich der Umgebung abgedichteter Weise stattfindet.

Jeder der beschriebenen Fluidkanäle 22 erstreckt sich teilweise in der Ventileinheit 5, insbesondere in deren Ventilgehäuse 17, und teilweise im Ventilträger 2. Genauer gesagt hat jeder Fluidkanal 22 einen in der Ventileinheit 5 verlaufenden Längenabschnitt, der als Ventileinheit-Kanalabschnitt 22a bezeichnet sei, sowie einen sich daran anschließenden weiteren Längenabschnitt, der im Ventilträger 2 verläuft und der als Ventilträger-Kanalabschnitt 22b bezeichnet sei. Jeder Ventileinheit-Kanalabschnitt 22a hat eine zur Montagefläche 6 ausmündende Ventileinheit-Kanalmündung 22c, der eine Kanalmündung des zum gleichen Fluidkanal 22 gehörenden Ventilträger-Kanalabschnitt 22b gegenüberliegt, die als Ventilträger-Kanalmündung 22d bezeichnet sei. Die Ventilträger-Kanalmündung 22d befindet sich an dem der Ventileinheit 5 zugeordneten Bestückungsplatz 4a der Bestückungsfläche 4. Folglich liegen sich pro Ventileinheit 5 die Ventileinheit-Kanalmündung 22c und die Ventilträger-Kanalmündung 22d jedes Fluidkanals 22 in dem zwischen dem Ventilträger 2 und der Ventileinheit 5 befindlichen Fügebereich paarweise gegenüber. Auf diese Weise kann das durch eine jeweilige Ventileinheit 5 zu steuernde Druckmedium zwischen der Ventileinheit 5 und dem Ventilträger 2 überströmen.

Bei den Fluidzuführkanälen 23 kommuniziert der Ventilträger-Kanalabschnitt 22b mit seinem der Ventilträger-Kanalmündung 22d entgegengesetzten Endbereich mit dem Sammel-Einspeisekanal 35. Bei den Fluidabführkanälen 26, 27 kommuniziert jeder Ventilträger-Kanalabschnitt 22b mit seinem der Ventilträger-Kanalmündung 22d entgegengesetzten Ende mit einem der Sammelabführkanäle 36, 37.

Während sich beim Ausführungsbeispiel die Arbeitskanäle 24, 25 ebenfalls teils in der Ventileinheit 5 und teils im Ventilträger 2 erstrecken, ist bei einer nicht illustrierten Ausführungsform vorgesehen, dass mindestens ein Arbeitskanal 24, 25 nur in der Ventileinheit 5 ausgebildet ist und sich die zugeordneten Anschlussmittel 33 an der betreffenden Ventileinheit 5 befinden.

Die einer jeweiligen Ventileinheit 5 zugeordneten Dichtungsmittel 47 liegen jeweils einerseits an der Montagefläche 6 und andererseits an der Bestückungsfläche 4 und der Abdichtung an. Dabei umrahmen sie die sich jeweils paarweise gegenüberliegenden Kanalmündungen 22c, 22d und sorgen dafür, dass ein leckagefreier Fluidübertritt zwischen dem Ventilträger 2 und der Ventileinheit 5 gewährleistet ist.

Eine Besonderheit der Rückschlagventile 43 besteht darin, dass ihre Ventilsitze 46 als einstückige Bestandteile der Dichtungsmittel 47 ausgeführt sind. Jeder Ventilsitz 46 ist also unmittelbar von denjenigen Dichtungsmitteln 47 gebildet, die dazu dienen, den Ventileinheit-Kanalabschnitt 22a und den Ventilträger-Kanalabschnitt 22b des zugeordneten Fluidabführkanals 26, 27 unter bezüglich der Umgebung erfolgenden Abdichtung miteinander zu verbinden.

Da bei den Ausführungsbeispielen beide einer jeweiligen Ventileinheit 5 zugeordnete Fluidabführkanäle 26, 27 mit einem eigenen Rückschlagventil 43 ausgestattet sind, enthalten die Dichtungsmittel 47 pro Ventileinheit 5 zwei voneinander unabhängige Ventilsitze 46. Diese befinden sich jeweils im Bereich eines der beiden Fluidabführkanäle 26, 27. An dieser Stelle sei darauf hingewiesen, dass prinzipiell die Möglichkeit besteht, bei mindestens einer mit zwei Fluidabführkanälen 26, 27 ausgestatteten Ventileinheit 5 nur einer dieser Fluidabführkanäle 26, 27 ein Rückschlagventil 43 zuzuordnen. In diesem Fall kann zur Verwendung einheitlicher Dichtungsmittel 47 dennoch beiden Fluidabführkanälen 26, 27 ein Ventilsitz 46 zugeordnet sein. Dieser Ventilsitz 46 kann bei denjenigen Fluidabführkanal 26, 27, der kein Rückschlagventil 43 aufweist, aber auch entfallen.

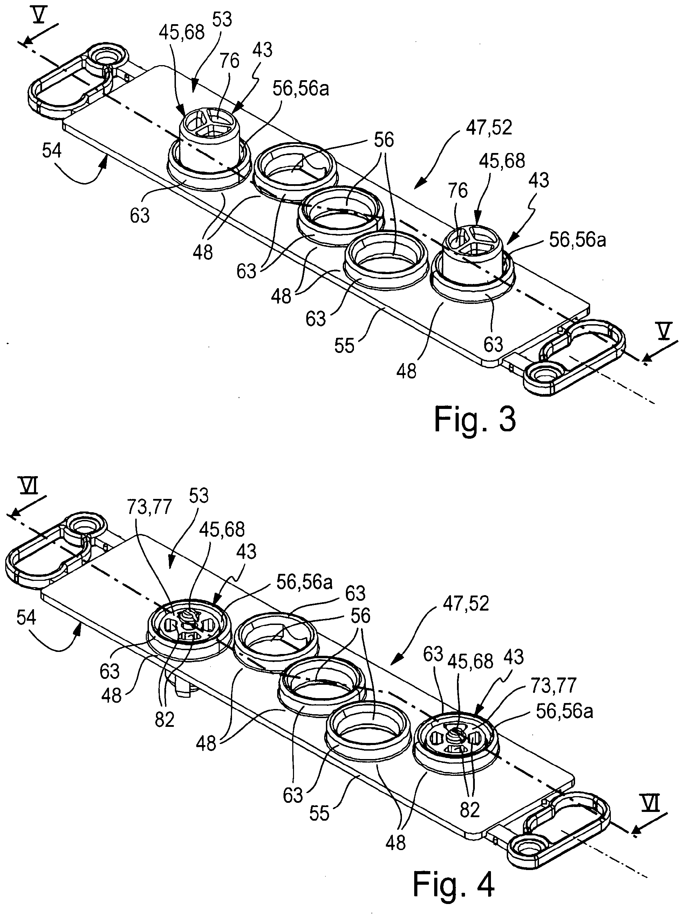

Zweckmäßigerweise sind die einer jeweiligen Ventileinheit 5 zugeordneten Dichtungsmittel 47 als eine zusammenhängende Dichtungsstruktur ausgebildet, in der sämtliche Dichtungsmaßnahmen vereinigt sind, die sich auf die fluiddichte Verbindung der Kanalabschnitte 22a, 22b der Fluidkanäle 22 beziehen. So sind die zu den einzelnen Fluidkanälen 22 gehörenden Kanalmündungen 22c, 22d jeweils von einem ringförmigen Dichtabschnitt 48 umgeben, der einerseits an die Montagefläche 6 und andererseits an die Bestückungsfläche 4 unter Abdichtung angepresst ist, wobei sämtliche ringförmigen Dichtabschnitte 48 in der besagten zusammenhängenden Dichtungsstruktur vereinigt sind. Bei dieser zusammenhängenden Dichtungsstruktur handelt es sich bevorzugt um eine über gummielastische Eigenschaften verfügende Dichtungsplatte 52. Mit anderen Worten bilden die Dichtungsmittel 47 eine zusammenhängende Dichtungsstruktur mit plattenförmiger Gestalt. Eine bevorzugte Ausführungsform für eine solche Dichtungsplatte 52 ist bei den Ausführungsbeispielen verwirklicht und insbesondere aus den Figuren 3 und 4 ersichtlich.

Die Dichtungsplatte 52 hat eine Plattenebene, die im montierten Zustand der Dichtungsplatte 52 parallel zur Bestückungsfläche 4 verläuft. Dabei hat die Dichtungsplatte 52 eine im Folgenden als Oberseite 53 bezeichnete erste Seite, die der Montagefläche 6 zugewandt ist, und eine diesbezüglich entgegengesetzte zweite Seite, die zur besseren Unterscheidung als Unterseite 54 bezeichnet sei.

Die Dichtungsplatte 52 ist rechtwinklig zu ihrer Plattenebene von mehreren Durchbrechungen 56 durchsetzt, die jeweils von einem der ringförmigen Dichtabschnitte 48 umrahmt sind. Die Anzahl der Durchbrechungen 56 entspricht der Anzahl der abzudichtenden Fluidkanäle 22, wobei die Durchbrechungen 56 derart verteilt sind, dass jede Durchbrechung 56 zwischen den sich gegenüberliegenden Kanalmündungen 22c, 22d eines der Fluidkanäle 22 zu liegen kommt. Die ringförmigen Dichtabschnitte 48 sind diejenigen Bereiche der Dichtungsplatte 52, die die einzelnen Durchbrechungen 56 umschließen.

Jede Ventileinheit 5 ist durch geeignete Befestigungsmittel 57 am Ventilträger 2 befestigt. Diese Befestigungsmittel 57 sorgen dafür, dass die Ventileinheit 5 mit dem Ventilträger 2 verspannt ist, wobei die Dichtungsmittel 47, bevorzugt also die Dichtungsplatte 52, zwischen der Montagefläche 6 und der Bestückungsfläche 4 mit Dichtkontakt eingespannt ist. Bei den Befestigungsmittel 57 handelt es sich beispielsweise um Befestigungsschrauben, die die Ventileinheit 5 in der Höhenrichtung durchsetzen und die in den Ventilträger 2 eingeschraubt sind.

Die Dichtungsplatte 52 verfügt über einen als Plattenkörper 55 bezeichneten plattenförmigen Abschnitt, dessen Hauptausdehnungsebene die Plattenebene definiert und der von den Durchbrechungen 56 im genannten Verteilungsmuster rechtwinklig zur Plattenebene durchsetzt ist.

Zur besseren Unterscheidung sollen im Folgenden die einem Fluidabführkanal 26, 27 zugeordneten Durchbrechungen 56 der Dichtungsplatte 52 auch als Abführdurchbrechungen 56a bezeichnet werden. Diese Abführdurchbrechungen 56a sind jeweils an der dem Ventilträger 2 zugewandten Unterseite 54 von einem der schon erwähnten Ventilsitze 46 umrahmt. Vorzugsweise ist jeder Ventilsitz 46 bezüglich des Plattenkörpers 55 erhaben ausgeführt und ragt in den Ventilträger-Kanalabschnitt 22b des zugeordneten Fluidabführkanals 26, 27 hinein.

Als vorteilhaft hat es sich erwiesen, einen jeweiligen Ventilsitz 46 an der dem Plattenkörper 55 axial entgegengesetzten Stirnseite eines im Folgenden als Ventilsitz-Fortsatz 58 bezeichneten rohrstutzenartigen Fortsatzes auszubilden, der in einer die Abführdurchbrechnung 56a umrahmenden Weise an die Unterseite des Plattenkörpers 55 einstückig angeformt ist. Dieser Ventilsitz-Fortsatz 58 ragt durch die Ventilträger-Kanalmündung 22d hindurch in den Ventilträger-Kanalabschnitt 22b hinein, wobei der Außendurchmesser des Ventilsitz-Fortsatze 58 zweckmäßigerweise etwas geringer ist als der Innendurchmesser des Ventilträger-Kanalabschnitts 22b in dem den Ventilsitz-Fortsatz 58 aufnehmenden Endabschnitt.

Der Plattenkörper 55, der Ventilsitz-Fortsatz 58 und der Ventilsitz 56 sind insbesondere einstückig miteinander verbunden.

Um eine optimale Abdichtung zwischen der Ventileinheit 5 und dem Ventilträger 2 zu erhalten, weist die Dichtungsplatte 52 an ihrer Unterseite 54 zweckmäßigerweise mehrere ringförmige Dichtwulste 62 auf, die nach unten über dem Plattenkörper 55 vorstehen und die jeweils eine der Durchbrechungen 56 umrahmen. Die ringförmigen Dichtwulste 62 sind jeweils rings um eine der Ventilträger-Kanalmündungen 22d herum mit der Bestückungsfläche 4 verpresst, wobei die daraus resultierende hohe Flächenpressung eine sehr zuverlässige Abdichtung gewährleistet.

Die den Abführdurchbrechungen 56a zugeordneten ringförmigen Dichtwulste 62 sind zweckmäßigerweise mit radialem Abstand konzentrisch um den ringförmigen Ventilsitz 46 bzw. den Ventilsitz-Fortsatz 58 herum angeordnet. Ein radialer Abstand zwischen dem ringförmigen Dichtwulst 62 und dem von dem ringförmigen Dichtwulst 62 umschlossenen Ventilsitz 46 hat den Vorteil, dass die beim Einspannen der Dichtungsplatte 52 auftretende Verformung der ringförmigen Dichtwulste 62 die Formgebung des Ventilsitzes 46 nicht beeinträchtigt.

Die ringförmigen Dichtwulste 62 können an einem planen Flächenbereich oder auch in einem nach Art einer Ringnut vertieften Flächenbereich der Bestückungsfläche 4 anliegen.

Es ist auch vorteilhaft, wenn jede Durchbrechung 56 im Bereich der Oberseite 53 der Dichtungsplatte 52 von einem einstückig an den Plattenkörper 55 angeformten ringförmigen Dichtkragen 63 umschlossen ist, der unter Abdichtung im Bereich der Montagefläche 6 an der Ventileinheit 5 bzw. an deren Ventilgehäuse 17 anliegt. Der ringförmige Dichtkragen 63 wird durch die Ventileinheit 5 axial ein Stückweit elastisch zusammengedrückt, so dass sich eine hohe Dichtkraft aufbaut. Zweckmäßigerweise ist der Ventileinheit-Kanalabschnitt 22a jedes Fluidkanals 22 im Bereich der Ventileinheit-Kanalmündung 22c im Rahmen eines abgestuften Längsverlaufs erweitert. Jeder Ventileinheit-Kanalabschnitt 22a endet folglich mit einem zur Montagefläche 6 hin offenen ringförmigen Erweiterungsabschnitt 64, der mit Abstand zur Montagefläche 6 eine der Bestückungsfläche 4 zugewandete ringförmige innere Begrenzungsfläche 65 aufweist. Der ringförmige Dichtkragen 63 taucht in den Erweiterungsabschnitt 64 ein und stützt sich mit seiner dem Plattenkörper 55 axial entgegengesetzten Stirnfläche unter Abdichtung an der ringförmigen inneren Begrenzungsfläche 65 ab.

Die ringförmigen Dichtwülste 62 und/oder die ringförmigen Dichtkragen 63 können bei einer vereinfachten Ausführungsform der Dichtungsplatte 52 auch entfallen.

Jede Abführdurchbrechung 56a, der ein Rückschlagventil 43 zugeordnet ist, ist vom Rückschlagventilglied 45 des Rückschlagventils 43 durchsetzt. Das Rückschlagventilglied 45 hat eine axiale Erstreckung mit einer Längsachse 66, die rechtwinkelig zur Plattenebene der Dichtungsplatte 52 ausgerichtet ist. Im Bereich der Unterseite 54 der Dichtungsplatte 52 weist das Rückschlagventilglied 45 einen Verschlusskopf 67 auf, der dem zugeordneten Ventilsitz 46 axial vorgelagert ist und dessen Querschnittsfläche größer ist als diejenige der vom Ventilsitz 46 umrahmten Mündung der Abführdurchbrechung 56a. Der Verschlusskopf 67 ist durchbrechungslos ausgebildet und liegt in der Schließstellung des Rückschlagventilgliedes 45 unter Abdichtung am axial benachbarten Ventilsitz 46 an. In jeder Offenstellung des Rückschlagventilgliedes 45 ist der Verschlusskopf 67 vom zugeordneten Ventilsitz 46 axial entfernt und gibt dadurch die Abführdurchbrechung 56a für einen Fluiddurchtritt frei.

Im Bereich der Oberseite 53 der Dichtungsplatte 52 weist das Rückschlagventilglied 45 einen in den Ventileinheit-Kanalabschnitt 22a des Fluidabführkanals 26, 27 hineinragenden Anschlagkopf 68 auf. Während der Verschlusskopf 67 durch Zusammenwirken mit dem Ventilsitz 46 die Bewegung des Rückschlagventilgliedes 45 in Richtung zur Ventileinheit 5 begrenzt, begrenzt der Anschlagkopf 68 die Bewegung des Rückschlagventilgliedes 45 in Richtung zum Ventilträger 2. Der Anschlagkopf 68 hat eine der Dichtungsplatte 52 axial zugewandte Anschlagfläche 72, mit der er sich in einer maximalen Offenstellung des Rückschlagventilgliedes 45 von der Seite der Ventileinheit 5 her abstützt, wobei die Abstützung je nach Ausführungsform eine bezüglich der Dichtungsplatte 52 direkte Abstützung oder indirekte Abstützung ist.

Dem Anschlagkopf 68 ist eine Abstützstruktur 73 zugeordnet, die sich bezogen auf die Längsachse 66 axial zwischen der Anschlagfläche 72 und dem Ventilsitz 46 befindet. Diese Abstützstruktur 73 ist bezüglich der Dichtungsplatte 52 ortsfest und macht die Bewegung des Rückschlagventilglieds 45 nicht mit. Die Abstützstruktur 73 definiert eine der Anschlagfläche 72 zugewandte und folglich beim Ausführungsbeispiel nach oben weisende Abstützfläche 74, an der das Rückschlagventilglied 45 mit der Anschlagfläche 72 des Anschlagkopfes 68 in einer maximalen Offenstellung anliegt. Bei der Umschaltbewegung 44 wechselt sich also das Zusammenwirken zwischen dem Verschlusskopf 67 und dem Ventilsitz 46 mit dem Zusammenwirken zwischen dem Anschlagkopf 68 und der Abstützstruktur 73 ab.

Das Rückschlagventilglied 65 verfügt zweckmäßigerweise über mindestens einen sich axial erstreckenden Verbindungsschaft 75, dessen Durchmesser wesentlich kleiner ist als der Durchmesser der Abführdurchbrechung 56a und der an der Unterseite den Verschlusskopf 67 und an der Oberseite den Anschlagkopf 68 trägt. Zweckmäßigerweise sind diese vorgenannten Komponenten einstückig miteinander verbunden. Der Verbindungsschaft 75 durchsetzt die Abführdurchbrechung 56a.

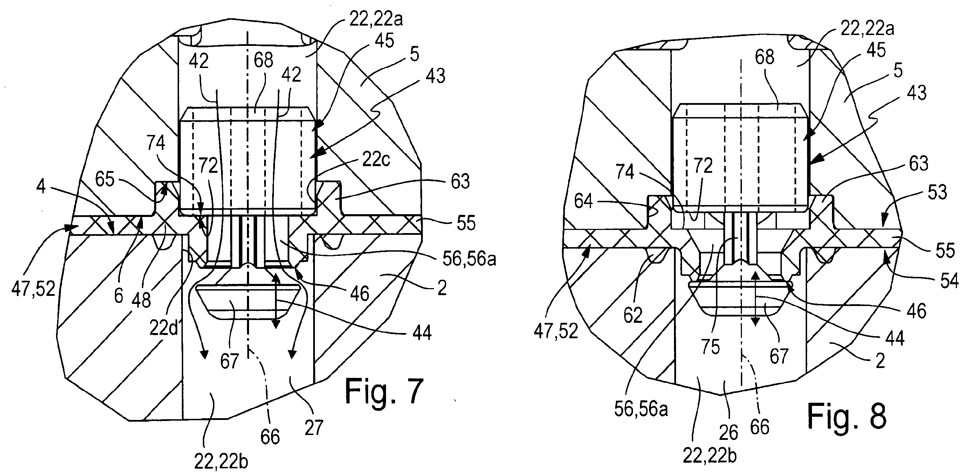

Bei dem anhand der Figuren 4, 7 und 8 illustrierten Ausführungsbeispiel stützt sich der Anschlagkopf 68 in der maximalen Offenstellung des Rückschlagventilgliedes 45 direkt an der Dichtungsplatte 52 ab. Hier ist die Abstützstruktur 73 unmittelbar von dem die Abführdurchbrechung 56a umrahmenden Randbereich des Plattenkörpers 55 gebildet. Diese Abstützstruktur 73 ist beim Ausführungsbeispiel radial außen von dem ringförmigen Dichtkragen 63 umschlossen. Wenn der Anschlagkopf 68 an der von der Dichtungsplatte 52 gebildeten Abstützfläche 74 anliegt, taucht er zweckmäßigerweise in den von dem ringförmigen Dichtkragen 63 umrahmten Bereich ein. Um die Anschlagfunktion zu erfüllen, ist der Anschlagkopf 68 zumindest bereichsweise mit einem größeren Querschnitt ausgeführt als der Querschnitt der zugeordneten Abführdurchbrechung 56a.

Diese Ausführungsform bietet den Vorteil, dass der Anschlagkopf 68 zur Linearführung des Rückschlagventilgliedes 45 bei seiner Umschaltbewegung 44 genutzt werden kann. So weist beim Ausführungsbeispiel der Anschlagkopf 68 einen derartigen Querschnitt auf, dass er von der Wandung des Ventileinheit-Kanalabschnittes 22a in axial verschiebbarer Weise radial abgestützt ist. In diesem Fall kann der Verschlusskopf 67 zweckmäßigerweise mit einem relativ kleinen Querschnitt ausgeführt sein, so dass zwischen seinem Außenumfang und der Wandung des Ventilträger-Kanalabschnittes 22b ein relativ großer Ringspalt vorhanden ist, der eine optimale Durchströmung des abzuführenden Druckmediums gewährleistet.

Um selbst kein störendes Strömungshindernis darzustellen, ist der Anschlagkopf 68 zweckmäßigerweise einfach oder mehrfach axial durchbrochen. Diese mindestens eine Durchbrechung bildet einen Strömungskanal 76, durch den hindurch das Druckmedium in der Offenstellung des Rückschlagventilgliedes 45 den Anschlagkopf 68 passieren kann. Alternativ wäre es auch möglich, den Anschlagkopf 68 zur Bildung entsprechender Strömungskanäle 76 an seinem Außenumfang mit axial durchgehenden Nuten zu versehen.

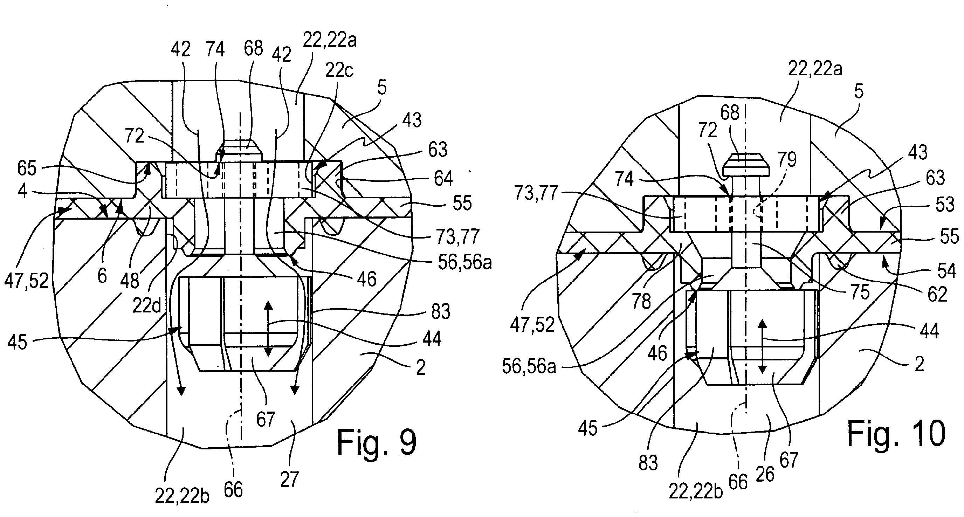

Das Ausführungsbeispiel der Figuren 4, 9 und 10 illustriert eine Variante mit in der maximalen Offenstellung indirekter Abstützung des Anschlagkopfes 68 bezüglich der Dichtungsplatte 52. Hier ist zusätzlich zur Dichtungsplatte 52 ein separater Abstützkörper 77 vorgesehen, der die Abstützstruktur 73 bildet und der axial zwischen der Dichtungsplatte 52 und dem Anschlagkopf 68 angeordnet ist. Der Abstützkörper 77, der vorzugsweise scheibenförmig ausgebildet ist, stützt sich direkt an der Oberseite der Dichtungsplatte 52 ab, und zwar insbesondere an einem die Abführdurchbrechung 56a umschließenden Randabschnitt 78 des Plattenkörpers 55. Der Abstützkörper 77 ist des Weiteren bezüglich der Dichtungsplatte 52 derart ortsfest fixiert, dass er von der Dichtungsplatte 52 nicht abheben kann. Dies kann beispielsweise dadurch geschehen, dass der Abstützkörper 77 in eine spritzgegossene Dichtungsplatte 52 eingebettet ist. Exemplarisch wird die axiale Fixierung dadurch erreicht, dass der Abstützkörper 77 über einen derartigen Außendurchmesser verfügt, dass er radial in den Erweiterungsabschnitt 64 eintaucht und durch dessen innere Begrenzungsfläche 65 nach oben hin abgestützt ist. Bevorzugt ist der Abstützkörper 77 auf diese Weise zwischen der inneren Begrenzungsfläche 65 und der Dichtungsplatte 52 axial unbeweglich eingespannt.

Das Rückschlagventilglied 45 durchsetzt mit seinem Verbindungsschaft 75 nicht nur die Abführdurchbrechung 56a, sondern auch den Abstützkörper 77. Dabei ist der Verbindungsschaft 75 bezüglich des Abstützkörpers 77 axial verschiebbar, um die Umschaltbewegung 44 zu ermöglichen. Der Anschlagkopf 68 hat einen größeren Querschnitt als die von dem Verbindungsschaft 75 durchsetzte Durchtrittöffnung 79 des Abstützkörpers 77, so dass er sich zur Vorgabe der maximalen Offenstellung mit seiner Anschlagfläche 72 an einer nach oben weisenden Abstützfläche 74 abstützt, die rings um die Durchtrittsöffnung 79 herum an dem Abstützkörper 77 ausgebildet ist.

Der Abstützkörper 77 ist zweckmäßigerweise ein- oder mehrfach durchbrochen, um Strömungskanäle 82 zu bilden, durch die das aus der Ventileinheit 5 abströmende Druckmedium in der Offenstellung des Rückschlagventilgliedes 45 hindurchströmen kann.

Bei dieser Ausführungsform ist es vorteilhaft, wenn der Anschlagkopf 68 über einen möglichst kleinen Querschnitt verfügt. Dadurch kann der Anschlagkopf 68 keine Führungsaufgaben in Bezug auf die Umschaltbewegung 44 übernehmen. Die Linearführung wird dann entweder nur durch das Zusammenwirken zwischen dem Verbindungsschaft 75 und der Durchtrittsöffnung 79 bewirkt oder aber alternativ oder zusätzlich dadurch, dass der Verschlusskopf 67 zur Linearführung des Rückschlagventilgliedes 45 herangezogen wird. Letzteres ist beim Ausführungsbeispiel umgesetzt, wo der Verschlusskopf 67 an seinem radialen Außenumfang mehrere über den Umfang verteilte Führungsvorsprünge 83 aufweist, die gleitverschieblich an der Wandung des Ventilträger-Kanalabschnittes 22b des Fluidführungskanals 26, 27 anliegen. Der zwischen in der Umfangsrichtung benachbarten Führungsvorsprüngen 83 liegende Zwischenraum definiert jeweils einen Strömungskanal, durch den das abströmende Druckmedium in der Offenstellung des Rückschlagventilgliedes 45 außen am Verschlusskopf 67 vorbeiströmen kann.

Die Führungsvorsprünge 83 sind zweckmäßigerweise als sich axial erstreckende Führungsrippen ausgebildet, was auf das Ausführungsbeispiel zutrifft.

Vorzugsweise ist das Rückschlagventilglied 45 nicht durch irgendwelche mechanischen Vorspannmittel in eine bestimmte Grundstellung bezüglich der Dichtungsplatte 52 vorgespannt. Das Rückschlagventilglied 45 ist bezüglich der Dichtungsplatte 52 zur Ausführung der Umschaltbewegung 44 frei beweglich. Die momentane Schaltstellung wird nur durch die Gewichtskraft des Rückschlagventilgliedes 45 und die Rückschlagventilglied 45 axial angreifende Druckdifferenz bestimmt.

Da das Rückschlagventilglied 45 in der bevorzugten Gebrauchslage der Ventilanordnung 1 mit vertikaler Längsachse 66 angeordnet ist, nimmt es im drucklosen Zustand des zugeordneten Fluidabführkanals 26, 27 allein aufgrund seiner Gewichtskraft die maximale Offenstellung ein, in der es bezüglich der Dichtungsplatte 52 so weit abgesenkt ist, wie dies der Anschlagkopf 68 durch Zusammenwirken mit der Abstützfläche 74 zulässt. Dies bedeutet, dass das Rückschlagventil 43 im Normalbetrieb der Ventilanordnung 1, so lange im zugeordneten Sammelabführkanal 36, 37 kein Rückstauereignis auftritt, die maximale Offenstellung einnimmt. Erst wenn ein solches Rückstauereignis eintritt, verlagert sich das Rückschlagventilglied 45 nach oben bis in die Schließstellung, wobei das Rückschlagventilglied 45 ein sehr gutes Ansprechverhalten an den Tag legt, weil es nicht durch Federmittel in Richtung der maximalen Offenstellung vorgespannt ist.

Zweckmäßigerweise wird die Dichtungsplatte 52 schon vor der Montage der Ventileinheit 5 mit allen Komponenten des zugehörigen mindestens einen Rückschlagventils 43 bestückt. Die auf diese Weise vorliegende Dichtplatte-Rückschlagventil-Baugruppe lässt sich bei der Montage der Ventilanordnung 1 sehr einfach handhaben. Durch einerseits den Verschlusskopf 67 und andererseits den Anschlagkopf 68 wird das durch die Abführdurchbrechung 56a hindurchgesteckte Rückschlagventilglied 45 verliersicher an der Dichtungsplatte 52 gehalten.

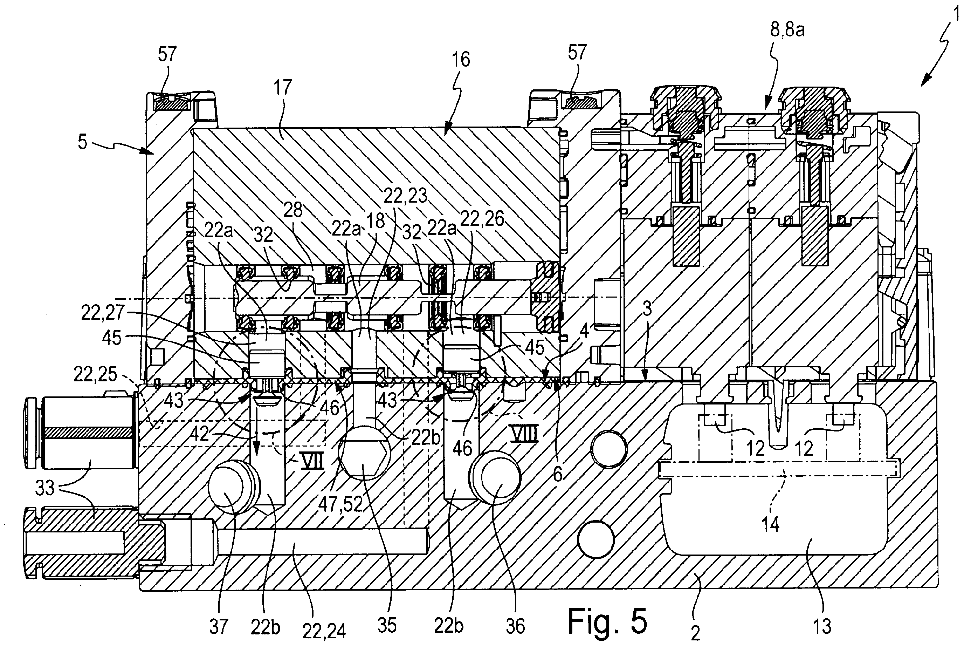

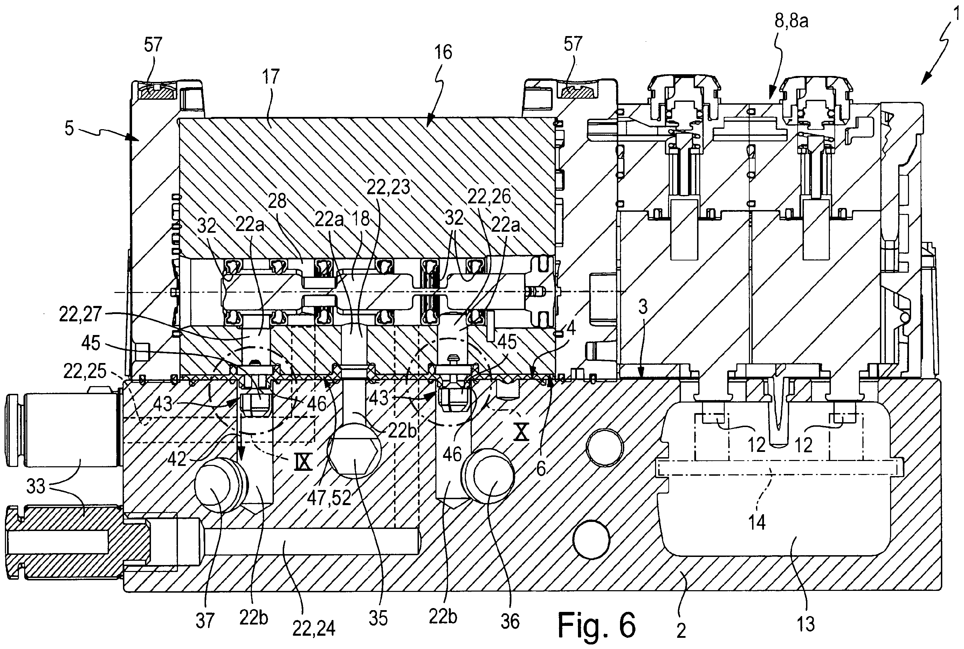

Während bei der Ausführungsform der Figuren 5, 7 und 8 der Verschlusskopf 67 und der Anschlagkopf 68 unmittelbar durch Zusammenwirken mit der Dichtungsplatte 52 für die verliersichere Fixierung des Rückschlagventilgliedes 45 sorgen, trägt beim Ausführungsbeispiel der Figuren 6, 9 und 10 der zwischen den Verschlusskopf 67 und den Anschlagkopf 68 eingegliederte Abstützkörper 77 mit zur verliersicheren Fixierung bei. Der Anschlagkopf 68 ist zweckmäßigerweise derart in sich verformbar ausgebildet, dass er bei seiner Montage im Rahmen eines Rastvorganges durch die Durchtrittsöffnung 79 axial hindurchdrückbar ist.

## Patentansprüche

1. Ventilanordnung, mit einem Ventilträger (2), der eine Bestückungsfläche (4) aufweist, an die unter Zwischenschaltung von über gummielastische Eigenschaften verfügenden Dichtungsmitteln (47) mindestens eine Ventileinheit (5) der Ventilanordnung (1) mit einer Montagefläche (6) voraus angesetzt ist, mit mehreren sich jeweils aus einem in der Ventileinheit (5) verlaufenden Ventileinheit-Kanalabschnitt (22a) und einem im Ventilträger (2) verlaufenden Ventilträger-Kanalabschnitt (22b) zusammensetzenden Fluidkanälen (22), wobei die Ventileinheit-Kanalabschnitte (22a) zu der Montagefläche (6) ausmünden und jeweils unter Zwischenschaltung der Dichtungsmittel (47) mit einem zu der Bestückungsfläche (4) ausmündenden Ventilträger-Kanalabschnitt (22b) kommunizieren, wobei mindestens einer der Fluidkanäle (22) ein zu einer Drucksenke führender Fluidabführkanal (26, 27) ist, in dessen Verlauf ein eine Fluidströmung in Richtung zu der Drucksenke zulassendes und in der Gegenrichtung verhinderndes Rückschlagventil (43) eingeschaltet ist, das ein bewegliches Rückschlagventilglied (45) aufweist, das zum Verhindern der Fluidströmung an einem Ventilsitz (46) des Rückschlagventils (43) anliegt und zum Zulassen der Fluidströmung von dem Ventilsitz (46) abgehoben ist, und wobei die Dichtungsmittel (47) in Form einer gummielastischen Dichtungsplatte (52) ausgeführt sind, die sich zwischen der Montagefläche (6) und der Bestückungsfläche (4) erstreckt und die für jeden abzudichtenden Fluidkanal (22) eine dessen Ventileinheit-Kanalabschnitt (22a) mit dem zugeordneten Ventilträger-Kanalabschnitt (22b) verbindende Durchbrechung (56) aufweist, wobei die mindestens einem Fluidabführkanal (26, 27) zugeordnete Durchbrechung (56, 56a) an der dem Ventilträger (2) zugewandten Seite der Dichtungsplatte (52) vom Ventilsitz (46) eines Rückschlagventils (43) umrahmt ist, der ein einstückiger Bestandteil der Dichtungsmittel (47) ist, **dadurch gekennzeichnet, dass** der Ventilsitz (46) des Rückschlagventils (43) in den Ventilträger-Kanalabschnitt (22b) des zugeordneten Fluidabführkanals (26, 27) hineinragt.

2. Ventilanordnung nach Anspruch 1, **dadurch gekennzeichnet, dass** zwei der Fluidkanäle (22) jeweils als voneinander unabhängige Fluidabführkanäle (26, 27) ausgebildet sind, wobei zweckmäßigerweise jedem dieser beiden Fluidabführkanäle (26, 27) ein eigenes Rückschlagventil (43) zugeordnet ist.

3. Ventilanordnung nach Anspruch 1 oder 2, **dadurch gekennzeichnet, dass** die Dichtungsplatte (52) einen gummielastischen Plattenkörper (55) aufweist, der von den den Fluidkanälen (22) zugeordneten Durchbrechungen (56) durchsetzt ist.

4. Ventilanordnung nach Anspruch 3, **dadurch gekennzeichnet, dass** der Ventilsitz (46) des Rückschlagventils (43) Bestandteil eines an der dem Ventilträger (2) zugewandten Seite einstückig an den Plattenkörper (55) der Dichtungsplatte (52) angeformten, die zugeordnete Durchbrechung (56, 56a) umrahmenden rohrstutzenartigen Ventilsitz-Fortsatzes (58) ist, der in den Ventilträger-Kanalabschnitt (22b) des zugeordneten Fluidabführkanals (26, 27) hineinragt.

5. Ventilanordnung nach Anspruch 4, **dadurch gekennzeichnet, dass** der rohrstutzenartige Ventilsitz-Fortsatz (58) mit radialem Abstand von einem an der Seite des Ventilträgers (2) ebenfalls einstückig an den Plattenkörper (55) der Dichtungsplatte (52) angeformten ringförmigen Dichtwulst (62) umschlossen ist, der mit radialem Abstand zur Kanalmündung (22d) des Ventilträger-Kanalabschnittes (22b) und der Abdichtung am Ventilträger (2) anliegt.

6. Ventilanordnung nach einem der Ansprüche 3 bis 5, **dadurch gekennzeichnet, dass** jede einem Fluidkanal zugeordnete Durchbrechung (56) des Plattenkörpers (55) von einem an der Seite der Ventileinheit (5) einstückig an den Plattenkörper (55) der Dichtungsplatte (52) angeformten ringförmigen Dichtkragen (63) umschlossen ist, der unter Abdichtung an der Ventileinheit (5) anliegt.

7. Ventilanordnung nach einem der Ansprüche 1 bis 6, **dadurch gekennzeichnet, dass** das Rückschlagventilglied (45) die ihm zugeordnete Durchbrechung (56, 56a) der Dichtungsplatte (52) axial beweglich durchsetzt und auf der dem Ventilträger (2) zugewandten Seite der Dichtungsplatte (52) einen Verschlusskopf (67) aufweist, der in der eine Fluidströmung verhindernden Schließstellung unter Abdichtung an dem als Bestandteil der Dichtungsplatte (52) ausgebildeten Ventilsitz (46) des Rückschlagventils (43) anliegt.

8. Ventilanordnung nach Anspruch 7, **dadurch gekennzeichnet, dass** der Verschlusskopf (67) an seinem radialen Außenumfang mehrere über den Umfang verteilte Führungsvorsprünge (83) aufweist, die gleitverschieblich an der Wandung des Ventilträger-Kanalabschnittes (22b) des zugeordneten Fluidabführkanals (26, 27) anliegen und die zweckmäßigerweise als sich axial erstreckende Führungsrippen ausgebildet sind.

9. Ventilanordnung nach einem der Ansprüche 1 bis 8, **dadurch gekennzeichnet, dass** das Rückschlagventilglied (45) auf der der Ventileinheit (5) zugewandten Seite der Dichtungsplatte (52) einen in die Ventileinheit (5) hineinragenden Anschlagkopf (68) aufweist, der sich in der eine Fluidströmung zulassenden maximalen Offenstellung des Rückschlagventilgliedes (45) von der Seite der Ventileinheit (5) her an der Dichtungsplatte (52) abstützt.

10. Ventilanordnung nach Anspruch 9, **dadurch gekennzeichnet, dass** sich das Rückschlagventilglied (45) in seiner maximalen Offenstellung mit seinem Anschlagkopf (68) direkt an der Dichtungsplatte (52) abstützt, indem der Querschnitt des Anschlagkopfes (68) zumindest partiell größer ist als der Querschnitt der dem Rückschlagventil (43) zugeordneten Durchbrechung (56, 56a) der Dichtungsplatte (52), wobei der Anschlagkopf (68) zweckmäßigerweise zur Ermöglichung eines Fluiddurchtrittes axial durchbrochen ist.

11. Ventilanordnung nach Anspruch 10, **dadurch gekennzeichnet, dass** der Anschlagkopf (68) im Ventileinheit-Kanalabschnitt (22qa) des zugeordneten Fluidabführkanals (26, 27) linear verschiebbar geführt aufgenommen ist.

12. Ventilanordnung nach Anspruch 9, **dadurch gekennzeichnet, dass** sich das Rückschlagventilglied (45) in seiner maximalen Offenstellung mit seinem Anschlagkopf (68) indirekt an der Dichtungsplatte (52) abstützt, indem es sich mit seinem Anschlagkopf (68) an einem bezüglich der Dichtungsplatte (52) separaten Abstützkörper (77) abstützt, der sich seinerseits an der der Ventileinheit (5) zugewandten Seite an der Dichtungsplatte (52) abstützt und der von dem Rückschlagventilglied (45) axial beweglich durchsetzt ist, wobei der Abstützkörper (77) zweckmäßigerweise zur Ermöglichung eines Fluiddurchtrittes axial durchbrochen ist

13. Ventilanordnung nach Anspruch 12, **dadurch gekennzeichnet, dass** der Abstützkörper (77) zwischen der Dichtungsplatte (52) und der Ventileinheit (5) axial fixiert und zweckmäßigerweise axial eingespannt ist.

14. Ventilanordnung nach einem der Ansprüche 1 bis 13, **dadurch gekennzeichnet, dass** sie eine Mehrzahl von Ventileinheiten (5) aufweist, die nebeneinander an der Bestückungsfläche (4) montiert sind, wobei Fluidabführkanäle (26, 27) dieser mehreren Ventileinheiten (5) gemeinsam mit mindestens einem im Ventilträger (2) ausgebildeten und zu der Drucksenke führenden Sammelabführkanal (36, 37) kommunizieren.

## Claims

1. Valve assembly with a valve carrier (2) which has a mounting face (4) to which is attached, with a mounting surface (6) leading, and with interposition of sealing means (47) with rubber-elastic properties, at least one valve unit (5) of the valve assembly (1), with several fluid passages (22), each comprised of a valve unit passage section (22a) running in the valve unit (5) and a valve carrier passage section (22b) running in the valve carrier (2), wherein the valve unit passage sections (22a) open out at the mounting surface (6), each communicating, under interposition of sealing means (47), with a valve carrier passage section (22b) opening out at the mounting face (4), wherein at least one of the fluid passages (22) is a fluid discharge passage (26, 27) leading to a pressure sink and in the course of which is interposed a non-return valve (43), allowing a fluid flow in the direction towards the pressure sink and preventing it in the opposite direction, and which has a movable non-return valve member (45) which, to prevent the fluid flow, fits up against a valve seat (46) of the non-return valve (43) and to allow the fluid flow is lifted from the valve seat (46), and wherein the sealing means (47) are in the form of a rubber-elastic sealing plate (52) which extends between the mounting surface (6) and the mounting face (4) and which has for each fluid passage (22) to be sealed a through hole (56) connecting its valve unit passage section (22a) with the assigned valve carrier passage section (22b), wherein the through hole (56, 56a) assigned to at least one fluid discharge passage (26, 27) is framed on the side of the sealing plate (52) facing the valve carrier (2) by the valve seat (46) of a non-return valve (43) which is an integral part of the sealing means (47), **characterised in that** the valve seat (46) of the non-return valve (43) extends into the valve carrier passage section (22b) of the assigned fluid discharge passage (26, 27).

2. Valve assembly according to claim 1, **characterised in that** two of the fluid passages (22) are each in the form of fluid discharge passages (26, 27) independent of one another, wherein expediently each of these two fluid discharge passages (26, 27) is assigned a separate non-return valve (43).

3. Valve assembly according to claim 1 or 2, **characterised in that** the sealing plate (52) has a rubber-elastic plate body (55), through which pass the through holes (56) assigned to the fluid passages (22).

4. Valve assembly according to claim 3, **characterised in that** the valve seat (46) of the non-return valve (43) is part of a nozzle-like valve seat extension (58) moulded integrally to the plate body (55) of the sealing plate (52) on the side facing the valve carrier (2) and framing the assigned through hole (56, 56a), and extending into the valve carrier passage section (22b) of the assigned fluid discharge passage (26, 27).

5. Valve assembly according to claim 4, **characterised in that** the nozzle-like valve seat extension (58) is encompassed with radial clearance by an annular sealing bead (62), similarly moulded integrally to the plate body (55) of the sealing plate (52) on the side of the valve carrier (2), and fitting up against the valve carrier (2) with radial clearance from the passage opening (22d) of the valve carrier passage section (22b) and the sealing.

6. Valve assembly according to any of claims 3 to 5, **characterised in that** each through hole (56) of the plate body (55) assigned to a fluid passage is encompassed by an annular seal collar (63) moulded integrally to the plate body (55) of the sealing plate (52) at the side of the valve unit (5) and fitting up against the valve unit (5) with sealing.

7. Valve assembly according to any of claims 1 to 6, **characterised in that** the non-return valve member (45) passes axially and movably through the assigned through hole (56, 56a) of the sealing plate (52) and has on the side of the sealing plate (52) facing the valve carrier (2) a closing head (67) which, in the closed position preventing a fluid flow, fits up with sealing against the valve seat (46) of the non-return valve (43) which is part of the sealing plate (52).

8. Valve assembly according to claim 7, **characterised in that** the closing head (67) has on its radial outer periphery several guide projections (83) distributed over the periphery and fitting up with the ability to slide against the wall of the valve carrier passage section (22b) of the assigned fluid discharge passage (26, 27), and which are in the form of axially extending guide ribs.

9. Valve assembly according to any of claims 1 to 8, **characterised in that** the non-return valve member (45) has on the side of the sealing plate (52) facing the valve unit (5) a stop head (68) extending into the valve unit (5) and which, in the maximum open position of the non-return valve member (45) allowing a fluid flow, rests on the sealing plate (52) from the side of the valve unit (5).

10. Valve assembly according to claim 9, **characterised in that** the non-return valve member (45) in its maximum open position rests with its stop head (68) directly on the sealing plate (52), since the cross-section of the stop head (68) is at least partly greater than the cross-section of the through hole (56, 56a) of the sealing plate (52) assigned to the non-return valve (43), wherein the stop head (68) is expediently axially interrupted to allow the passage of fluid.

11. Valve assembly according to claim 10, **characterised in that** the stop head (68) is held with linear guided movement facility in the valve unit passage section (22a) of the assigned fluid discharge passage (26, 27).

12. Valve assembly according to claim 9, **characterised in that** the non-return valve member (45) in its maximum open position rests indirectly with its stop head (68) on the sealing plate (52), since it rests with its stop head (68) on a supporting body (77) separate from the sealing plate (52) and in turn resting on the side of the sealing plate (52) facing the valve unit (5) and through which the non-return valve member (45) passes with axial movement, wherein the supporting body (77) is expediently axially interrupted to allow the passage of fluid.

13. Valve assembly according to claim 12, **characterised in that** the supporting body (77) is axially fixed between the sealing plate (52) and the valve unit (5), being expediently axially tensioned.

14. Valve assembly according to any of claims 1 to 13, **characterised in that** it has a multiplicity of valve units (5) mounted adjacent to one another on the mounting face (4), wherein fluid discharge passages (26, 27) of these several valve units (5) communicate jointly with at least one common discharge passage (36, 37) formed in the valve carrier (2) and leading to the pressure sink.

## Revendications

1. Ensemble formant soupape, comprenant un support de soupape (2), qui présente une surface d'équipement (4), au niveau de laquelle est placée à l'avance au moins une unité de soupape (5) de l'ensemble formant soupape (1) avec une surface de montage (6) en intercalant des moyens d'étanchéité (47) disposant de propriétés élastiques à la manière de caoutchouc, comprenant plusieurs canaux de fluide (22) se composant respectivement d'une section de canal d'unité de soupape (22a) s'étendant dans l'unité de soupape (5) et d'une section de canal de support de soupape (22b) s'étendant dans le support de soupape (2), dans lequel les sections de canal d'unité de soupape (22a) débouchent en direction de la surface de montage (6) et communiquent respectivement avec une section de canal de support de soupape (22b) débouchant en direction de la surface d'équipement (4) en intercalant les moyens d'étanchéité (47), dans lequel au moins un des canaux de fluide (22) est un canal d'évacuation de fluide (26, 27) menant à un puits de pression, le long duquel une soupape anti-retour (43) autorisant un écoulement de fluide en direction du puits de pression et l'empêchant dans le sens inverse est branchée, laquelle soupape anti-retour présente un organe de soupape anti-retour (45) mobile, qui repose au niveau d'un siège de soupape (46) de la soupape anti-retour (43) afin d'empêcher l'écoulement de fluide et qui est relevé du siège de soupape (46) afin d'autoriser l'écoulement de fluide, et dans lequel les moyens d'étanchéité (47) sont réalisés sous la forme d'une plaque d'étanchéité (52) élastique à la manière de caoutchouc, laquelle s'étend entre la surface de montage (6) et la surface d'équipement (4) et qui présente, pour chaque canal de fluide (22) à étanchéifier, un ajour (56) reliant la section de canal de l'unité de soupape (22a) de ce dernier à la section de canal de support de soupape (22b) associée, dans lequel l'ajour (56, 56a) associé à au moins un canal d'évacuation de fluide (26, 27) est encadré, au niveau du côté de la plaque d'étanchéité (52) tourné vers le support de soupape (2), par le siège de soupape (46) d'une soupape anti-retour (43), lequel fait partie intégrante d'un seul tenant des moyens d'étanchéité (47), **caractérisé en ce que** le siège de soupape (46) de la soupape anti-retour (43) dépasse dans la section de canal de support de soupape (22b) du canal d'évacuation de fluide (26, 27) associé.

2. Ensemble formant soupape selon la revendication 1, **caractérisé en ce que** deux des canaux de fluide (22) sont réalisés respectivement sous la forme de canaux d'évacuation de fluide (26, 27) indépendants les uns des autres, dans lequel une propre soupape anti-retour (43) est associée de manière appropriée à chacun desdits deux canaux d'évacuation de fluide (26, 27).

3. Ensemble formant soupape selon la revendication 1 ou 2, **caractérisé en ce que** la plaque d'étanchéité (52) présente un corps de plaque (55) élastique à la manière de caoutchouc, qui est traversé par les ajours (56) associés aux canaux de fluide (22).

4. Ensemble formant soupape selon la revendication 3, **caractérisé en ce que** le siège de soupape (46) de la soupape anti-retour (43) fait partie intégrante d'un prolongement de siège de soupape (58) de type tubulure formé au niveau du côté tourné vers le support de soupape (2) d'un seul tenant au niveau du corps de plaque (55) de la plaque d'étanchéité (52), encadrant l'ajour (56, 56a) associé, lequel prolongement de siège de soupape dépasse dans la section de canal de support de soupape (22b) du canal d'évacuation de fluide (26, 27) associé.

5. Ensemble formant soupape selon la revendication 4, **caractérisé en ce que** le prolongement de siège de soupape (58) de type tubulure est renfermé à une distance radiale par un bourrelet étanche (62) de forme annulaire formé au niveau du côté du support de soupape (2) également d'un seul tenant au niveau du corps de plaque (55) de la plaque d'étanchéité (52), lequel bourrelet d'étanchéité repose à une distance radiale par rapport à l'embouchure de canal (22d) de la section de canal de support de soupape (22b) et de l'étanchéification au niveau du support de soupape (2).

6. Ensemble formant soupape selon l'une quelconque des revendications 3 à 5, **caractérisé en ce que** chaque ajour (56), associé à un canal de fluide, du corps de plaque (55) est renfermé par un rebord étanche (63) de forme annulaire formé au niveau du côté de l'unité de soupape (5) d'un seul tenant au niveau du corps de plaque (55) de la plaque d'étanchéité (52), lequel rebord étanche repose moyennant une étanchéification au niveau de l'unité de soupape (5).

7. Ensemble formant soupape selon l'une quelconque des revendications 1 à 6, **caractérisé en ce que** l'organe de soupape anti-retour (45) traverse de manière mobile axialement l'ajour (56, 56a), qui lui est associé, de la plaque d'étanchéité (52) et présente, sur le côté de la plaque d'étanchéité (52) tourné vers le support de soupape (2), une tête de fermeture (67), qui repose au niveau du siège de soupape (46), réalisé sous la forme d'une partie intégrante de la plaque d'étanchéité (52), de la soupape anti-retour (43) moyennant une étanchéification dans la position de fermeture empêchant un écoulement de fluide.

8. Ensemble formant soupape selon la revendication 7, **caractérisé en ce que** la tête de fermeture (67) présente, au niveau de sa périphérie extérieure radiale, plusieurs parties faisant saillie de guidage (83) réparties sur la périphérie, lesquelles reposent en coulissement au niveau de la paroi de la section de canal de support de soupape (22b) du canal d'évacuation de fluide (26, 27) associé et qui sont réalisées de manière appropriée sous la forme de nervures de guidage s'étendant de manière axiale.

9. Ensemble formant soupape selon l'une quelconque des revendications 1 à 8, **caractérisé en ce que** l'organe de soupape anti-retour (45) présente, sur le côté de la plaque d'étanchéité (52) tourné vers l'unité de soupape (5), une tête de butée (68) dépassant dans l'unité de soupape (5), laquelle prend appui, dans la position d'ouverture maximale, autorisant un écoulement de fluide, de l'organe de soupape anti-retour (45), depuis le côté de l'unité de soupape (5), au niveau de la plaque d'étanchéité (52).

10. Ensemble de soupape selon la revendication 9, **caractérisé en ce que** l'organe de soupape anti-retour (45) prend appui, dans sa position d'ouverture maximale, par sa tête de butée (68), directement au niveau de la plaque d'étanchéité (52), **en ce que** la section transversale de la tête de butée (68) est au moins en partie plus grande que la section transversale de l'ajour (56, 56a) de la plaque d'étanchéité (52) associé à la soupape anti-retour (43), dans lequel la tête de butée (68) est transpercée axialement de manière appropriée afin de rendre possible un passage de fluide.

11. Ensemble formant soupape selon la revendication 10, **caractérisé en ce que** la tête de butée (68) est logée de manière guidée avec possibilité de coulissement linéaire dans la section de canal d'unité de soupape (22a) du canal d'évacuation de fluide (26, 27) associé.

12. Ensemble formant soupape selon la revendication 9, **caractérisé en ce que** l'organe de soupape anti-retour (45) prend appui, dans sa position d'ouverture maximale, par sa tête de butée (68), indirectement au niveau de la plaque d'étanchéité (52) **en ce qu'**il prend appui, par sa tête de butée (68), au niveau d'un corps d'appui (77) séparé par rapport à la plaque d'étanchéité (52), lequel prend appui pour sa part au niveau du côté tourné vers l'unité de soupape (5) au niveau de la plaque d'étanchéité (52) et qui est traversé de manière mobile axialement par l'organe de soupape anti-retour (45), dans lequel le corps d'appui (77) est transpercé axialement de manière appropriée afin de rendre possible un passage de fluide.

13. Ensemble formant soupape selon la revendication 12, **caractérisé en ce que** le corps d'appui (77) est fixé de manière axiale et de manière appropriée est enserré de manière axiale entre la plaque d'étanchéité (52) et l'unité de soupape (5).

14. Ensemble formant soupape selon l'une quelconque des revendications 1 à 13, **caractérisé en ce qu'**il présente une multitude d'unités de soupape (5), qui sont montées les unes à côté des autres au niveau de la surface d'équipement (4), dans lequel des canaux d'évacuation de fluide (26, 27) desdites nombreuses unités de soupape (5) communiquent conjointement avec au moins un canal collecteur d'évacuation (36, 37) réalisé dans le support de soupape (2) et menant au puits de pression.
